(19) **Europäisches Patentamt / European Patent Office / Office européen des brevets**

(11) **EP 1 371 171 B1**

(12) # EUROPEAN PATENT SPECIFICATION

(45) Date of publication and mention
of the grant of the patent:
**02.01.2013 Bulletin 2013/01**

(51) Int Cl.:
**H04L 9/32** *(2006.01)*

(21) Application number: **02719315.0**

(22) Date of filing: **20.03.2002**

(86) International application number:
**PCT/US2002/008865**

(87) International publication number:
**WO 2002/075508 (26.09.2002 Gazette 2002/39)**

(54) **Scalable certificate validation and simplified PKI management**

Skalierbare Zertifikats Gültigkeit und vereinfachte PKI-Verwaltung

Validation échelonnable de certificat et gestion simplifiée d'ICP

(84) Designated Contracting States:
**AT BE CH CY DE DK ES FI FR GB GR IE IT LI LU MC NL PT SE TR**

(30) Priority: **20.03.2001 US 277244 P**
**25.06.2001 US 300621 P**
**27.12.2001 US 344245 P**

(43) Date of publication of application:
**17.12.2003 Bulletin 2003/51**

(73) Proprietor: **CoreStreet, Ltd.**
**Cambridge, MA 02140 (US)**

(72) Inventor: **MICALI, Silvio**
**Brookline, MA 02146 (US)**

(74) Representative: **Bickel, Michael**
**Westphal, Mussgnug & Partner**
**Patentanwälte**
**Herzog-Wilhelm-Strasse 26**
**80331 München (DE)**

(56) References cited:
• **HAUSER R ET AL: "Lowering security overhead in link state routing" COMPUTER NETWORKS, ELSEVIER SCIENCE PUBLISHERS B.V., AMSTERDAM, NL, vol. 31, no. 8, 23 April 1999 (1999-04-23), pages 885-894, XP004304524 ISSN: 1389-1286**
• **BRUCE SCHNEIER: "Applied cryptography second edition" 1996 , JOHN WILEY & SONS, INC. , USA XP002230325 page 574 -page 576**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND OF THE INVENTION**

**1. FIELD OF THE INVENTION**

This application relates to the field of digital certificates and more particularly to the field of management of digital certificates.

**2. DESCRIPTION OF RELATED ART**

In essence, a digital certificate C consists of a CA's digital signature securely binding together several quantities: SN, a serial number unique to the certificate, PK, the public key of the user, U, the user's identifier, $D_1$, the issue date, $D_2$, the expiration date, and additional fields. In symbols, $C=SIG_{CA}(SN, PK, U, D_1, D_2,...)$.

It is widely recognized that digital certificates provide the best form of Internet authentication. On the other hand, they are also difficult to manage. Certificates may expire after one year (i.e., $D_2 - D_2$ = 1 year). However, they may be revoked prior to their expiration; for instance, because their holders leave their companies or assume different duties within them. Thus, each transaction enabled by a given digital certificate needs a suitable proof of the current validity of that certificate, and that proof often needs to be archived as protection against future claims.

Unfortunately, the technologies used today for proving the validity of issued certificates do not scale well. At tomorrow's volume of digital certificates, today's validity proofs will be either too hard to obtain in a secure way, or too long and thus too costly to transmit (especially in a wireless setting). *Certificate validation is universally recognized as a crucial problem.* Unless efficiently solved, it will severely limit the growth and the usefulness of our PKIs.

Today, there are two main approaches to proving certificates' validity: Certificate Revocation Lists (CRLs) and the Online Certificate Status Protocol (OCSP).

CRLs

CRLs are issued periodically. A CRL essentially consists of a CA-signed list containing all the serial numbers of the revoked certificates. The digital certificate presented with an electronic transaction is then compared to the most recent CRL. If the given certificate is not expired but is on the list, then everyone knows from the CRL that the certificate is not valid and the certificate holder is no longer authorized to conduct the transaction. Else, if the certificate does not appear in the CRL, then the certificate is deduced to be valid (a double negative).

CRLs have not found much favor; for fear that they may become unmanageably long. (A fear that has been only marginally lessened by more recent CRL-partition techniques.) A few years ago, the National Institute of Standards and Technology tasked the MITRE Corporation [3] to study the organization and cost of a Public Key Infrastructure (PKI) for the federal government. This study concluded that CRLs constitute by far the largest entry in the Federal PKI's cost list.

OCSP

In the OCSP, a CA answers a query about a certificate C by returning its own digital signature of C's validity status at the current time. The OCSP is problematic in the following areas.

*Bandwidth.* Each validity proof generated by the OCSP has a non-trivial length. If RSA or other factoring based signature schemes are used, such a proof in fact requires at a minimum 2,048 bits for the CA's signature.

*Computation.* A digital signature is a computationally complex operation. In certain large applications, at peak traffic, the OCSP may require computing millions of signatures in a short time, which is computationally very expensive to do.

*Communication (if centralized).* Assume a single validation server implements the OCSP in a centralized manner. Then, all certificate-validity queries would have, eventually, to be routed to it, and the server will be a major "network bottleneck" causing considerable congestion and delays. If huge numbers of honest users suddenly query the server, a disrupting "denial of service" will probably ensue.

*Security (if distributed).* In general, distributing the load of a single server across several (e.g., 100) servers, strategically located around the world, alleviates network congestion. In the OCSP case, however, load distribution introduces worse problems than those it solves. In order to sign its responses to the certificate queries it receives, each of the 100 servers should have its own secret signing key. Thus, compromising any of the 100 servers is compromising the entire system. Secure vaults could protect such distributed servers, but at *great* cost.

"Applied cryptography second edition" (1996) from Bruce Schneier (ISBN. 0-471-11709-9), from John Wiley & Sons, Inc. discloses verification of the identity of users or entities based on the iteration of hashes applied on a value, which is employed as proof of validity.

## BRIEF SUMMARY OF THE INVENTION

According to the present invention, managing a digital certificate includes a landlord providing a digital certificate, a secure hardware device generating a series of n hash values, the secure hardware device providing an nth hash value to the landlord, wherein other hash values are not readily available to the landlord, the landlord placing the nth hash value in the certificate, the landlord digitally verifying the certificate containing the nth hash value to obtain a digitally signed certificate, a tenant obtaining the digitally signed certificate, the tenant obtaining the n hash values and the tenant managing the certificate by periodically issuing a previous hash value in the series of n hash values in response to the certificate being valid when the previous hash value is issued.

## DETAILED DESCRIPTION OF THE INVENTION

### Part I

The system described herein works with standard certificate formats (e.g., X.509v3) and enables a CA to prove the validity status of each certificate C at any time interval (e.g., every day, hour, or minute) starting with C's issue date, $D_1$. C's time granularity may be specified within the certificate itself, unless it is the same for all certificates. To be concrete, but without limitation intended, below we assume a one-day granularity for all certificates, and that each certificate expires 365 days after issuance.
*One-way hashing.* The system described herein uses a one-way function H, in particular a one-way hash function such as SHA [4]. Typically, such a function H enjoys the following properties:

1. H is at least 10,000 times faster to compute than a digital signature;
2. H produces 20-byte outputs, no matter how long its inputs; and
3. H is hard to invert: given Y, finding X such that H(X)=Y is practically impossible.

Of course, there is nothing magic about these specific properties. The schemes herein may work even if H had different speed, or different size outputs

### The Basic System

*Making a certificate C.* In addition to traditional quantities such as a serial number SN, a public key PK, a user name U, an issue date $D_1$, an expiration date $D_2$ (=$D_1$+365), a certificate C also includes two 20-byte values unique to it. Specifically, before issuing a certificate C, a CA randomly selects two different 20-byte values, $Y_0$ and $X_0$, and from them computes two corresponding 20-byte values, $\mathbf{Y_1}$ and $\mathbf{X_{365}}$, as follows. Value $\mathbf{Y_1}$ is computed by hashing $Y_0$ once: $Y_1=H(Y_0)$; and $X_{365}$ by hashing $X_0$ 365 times: $X_1=H(X_0)$, $X_2=H(X_1)$, ..., $\mathbf{X_{365}} = H(X_{364})$. Because H always produces 20-byte outputs, $\mathbf{Y_1}$, $\mathbf{X_{365}}$, and all intermediate values $X_j$ are 20-byte long. The values $Y_0,X_0,X_1,...,X_{364}$ are kept secret, while $\mathbf{Y_1}$ and $\mathbf{X_{365}}$ are included in the certificate: C=$\mathrm{SIG_{CA}}$(SN,PK,U,$D_1$,$D_2$,...,$\mathbf{Y_1}$,$\mathbf{X_{365}}$). We shall call $\mathbf{Y_1}$ the *revocation field* and $\mathbf{X_{365}}$ the *validity field.*
*Revoking and validating a not-yet-expired certificate C.* On the i-th day after C's issuance (i.e., on day $D_1$+i), the CA computes and releases a 20-byte proof of status for C as follows. If C is revoked, then, as a proof of C's revocation, the CA releases $Y_0$, that is, the H-inverse of the revocation field $\mathbf{Y_1}$. Else, as a proof of C's validity on that day, the CA releases $X_{365-i}$, that is, the i-th H-inverse of the validity field $\mathbf{X_{365}}$. (E.g., the proof that C is valid 100 days after issuance consists of $X_{265}$.) The CA may release $Y_0$ or $X_{365-i}$ by providing the value in response to a query or by posting it on the World Wide Web.
*Verifying the status of a not-yet-expired certificate* C. On any day, C's revocation proof, $Y_0$, is verified by hashing $Y_0$ once and checking that the result equals C's revocation field, $\mathbf{Y_1}$. (I.e., the verifier tests for himself that $Y_0$ really is the H-inverse of $\mathbf{Y_1}$.) Note that $\mathbf{Y_1}$ is guaranteed to be C's revocation field, because $\mathbf{Y_1}$ is certified within C. On the i-th day after C's issuance, C's validity proof on that day, $X_{365-i}$, is verified by hashing i times the value $X_{365-i}$ and checking that the result equals C's validity field, $\mathbf{X_{365}}$. (I.e., the verifier tests for himself that $X_{365-i}$ really is the i-th H-inverse of $\mathbf{X_{365}}$.) Note that a verifier knows the current day D as well as C's issuance date $D_1$ (because $D_1$ is certified within C), and thus immediately computes i=D-$D_1$.
*Of course.* The system described herein can use different functions H rather than a single one. For instance, $H_1$ to produce $X_1$ from $X_0$, $H_2$ to produce $X_2$ from $X_1$ and so on. Alternatively, additional inputs (e.g., part of the to be certificate, such a serial number, or the iteration number) can be given each time H is applied.

Security

• *A proof of revocation cannot be forged.*

The proof of revocation of a certificate C consists of the H-inverse of C's revocation field $Y_1$. Because H is essentially impossible to invert, once a verifier checks that a given 20-byte value $Y_0$ is indeed C's proof of revocation, it knows that $Y_0$ must have been released by the CA. In fact, only the CA can compute the H-inverse of $Y_1$: not because the CA can invert H better than anyone else, but because it computed $Y_1$ by starting with $Y_0$ and hashing it. Because the CA never releases C's revocation proof as long as C remains valid, an enemy cannot fake a revocation proof.

• *A proof of validity cannot be forged.*

On day i, the proof of validity of a certificate C consists of the i-th H-inverse of C's validity field $X_{365}$. Because H is essentially impossible to invert, once a verifier checks that a given 20-byte value $X_{365-i}$ is indeed C's proof of validity on day i, it knows that the CA must have released X365-i. In fact, only the CA can compute the i-th H-inverse of $X_{365}$: not because the CA can invert H better than anyone else, but because it computed $X_{365}$ by starting with $X_0$ and hashing it 365 times, thus computing along the way all the first 365 inverses of $X_{365}$. If certificate C become revoked on day i+1, the CA has already released the values X365-1,...,$X_{365-i}$ in the preceding i days (when C was still valid) but has not released and will never release the value $X_{365-i-1}$ (or any other value $X_j$ for j <365-i) in the future. Consequently, to forge C's validity proof on day i+1, an enemy should compute on his own the i+1st H-inverse of $X_{365}$ (i.e., the H-inverse of $X_{365-i}$), which is very hard to do. Similarly, an enemy cannot compute a validity proof for C on any day after i+1. To do so, it should again be able to invert H on input $X_{365-i}$. For instance, if it could compute C's validity proof on day i+2, $X_{362-i-2}$, then by hashing it once it would easily obtain $X_{365-i-1}$, the H-inverse of $X_{365-i}$.

Efficiency

• *A certificate C includes only two additional 20-byte values,* $Y_1$ *and* $X_{365}$.

This is a negligible cost. Recall that C already consists of a CA signature (at least 2048-bit long) of data that includes a public key PK (at least 1024-bit long), and that C may include comments and plenty of other data in addition to SN, PK, U, D1 and $D_2$.

• *Generating* $Y_1$ *and* $X_{365}$ *requires only 366 hashings total.*

This too is a negligible cost. Recall that issuing a certificate already requires computing a signature.

• *Proofs of revocation and proofs of validity are only 20-bytes long.*

Our 20-byte proofs are trivial to transmit and trivial to store, making the 20-byte technology ideal for wireless applications (because here bandwidth is still limited, and so is the storage capacity of many cellular phones and other wireless devices).
Proofs for the system described herein can be so short because they derive their security from elementary cryptographic components, such as one-way functions, which should exhibit an exponential amount of security. (Quite differently, digital signature schemes have complex security requirements. Their typical number-theoretic implementations offer at best a sub-exponential amount of security, and thus necessitate much longer keys.)
Proofs for the system described herein remain 20-bytes long whether the total number of certificates is a few hundred or a few billion. In fact there are $2^{160}$ possible 20-byte strings, and the probability that two certificates may happen to have a common proof of revocation or validity is negligible.
Note too that the length of our 20-byte proofs does not increase due to encryption or authentication. The 20-byte proofs of the system described herein are intended to be public and thus need not be encrypted. Similarly, the 20-byte proofs are self-authenticating: by hashing them the proper number of times they yield either the validity field or the revocation field specified within the certificate. They will not work if faked or altered, and thus need not be signed or authenticated in any manner.
Finally, a 20-byte proof of validity on day i, $X_{365-i}$, need not additionally include the value i: in a sense, it already includes its own time stamp. Indeed, as discussed before, i is the difference between the current day and the certificate's issue day, and if hashing $X_{365-i}$ i times yields the validity field of certificate C, then this proves that $X_{365-i}$ is C's proof of validity on day i.

• *The 20-byte proofs are computed instantly.*

A proof of revocation $Y_0$ or a proof of validity $X_{365-i}$ is just retrieved from memory. (Alternatively, each $X_{365-i}$ could be recomputed on the fly on day i; for instance by at most 364 hashings, if just $X_0$ is stored during certificate issuance. Surprisingly more efficient strategies are discussed in the next section.)

## Wireless

The system described herein is ideal for wireless implementations. Its scalability is enormous: it could accommodate billions of certs with great ease. The bandwidth it requires is negligible, essentially a 30-bit serial number for the query and 20-byte for the response. The computation it requires is negligible, because a certificate-status query is answered by a single table look-up and is immediately verified. Of course, great scalability, minimum bandwidth and trivial computation make the system described herein the technology of choice in a wireless environment.

## OCSP Comparison

The system described herein and OCSP are both on-demand systems: namely, a user sends a query about the current validity of a certificate and gets back an unforgeable and universally verifiable proof as a response. But there are differences in

1) Time accuracy;
2) Bandwidth;
3) CA efficiency;
4) Security; and
5) Operating costs.

## Time Accuracy

In principle, an OCSP response may specify time with unbounded accuracy, while a response for the system described herein specifies time with a predetermined accuracy: one day, one hour, one minute, etc. In low-value applications, one-day validity is plenty acceptable. For most financial applications, Digital Signature Trust considers a 4-hour accuracy sufficient. (Perhaps this is less surprising than it seems: for most financial transactions, orders received in the morning are executed in the afternoon and orders received in the afternoon are executed the next business day.) In any event, time is not specified by a real number with infinitely many digits. In an on-demand validation system, a time accuracy of less than one minute is seldom meaningful, because the clocks of the querying and answering parties may not be that synchronized. Indeed, in such a system, a time accuracy of 15 seconds is *de facto* real time.

To handle such an extreme accuracy, the system described herein computes hash chains that are roughly 1M long (i.e., needs to compute validity fields of the type $X_{1M}$), because there are at most 527,040 minutes in a year. If chains so long could be handled efficiently, the system described herein would de facto be real time. Computing 1M hashings is not problematic at certificate issuance: 1M hashings can be performed in less than 1 second even using very reasonable platforms, and a certificate is typically issued only once a year, and not under tremendous time pressure. Similarly, 1 second of computation is not problematic for the verifier of a cert validity proof (e.g., a merchant relying on the certificate) considering that he generally focuses just on an individual transaction, and has more time at hand. Computing 1M hashings per certificate-status request would, however, affect the performance of the server producing validity proofs, because it typically handles many transactions at a time. Fortunately, this server needs not to compute all these hashings on-line starting with $X_0$, but by table look up -capitalizing on having in storage the full hash-chain of every certificate. Nonetheless, storing 1M-long hash-chains may be a problem in applications with huge numbers of certificates. But, fortunately, as we shall mention later on, even ordinary servers can, using better algorithms, re-compute 1M-long hash chains with surprising efficiency.

## Bandwidth

The system described herein has an obvious bandwidth advantage over OCSP. The former uses 20-byte answers, while the latter typically uses 256 bytes.

## CA Efficiency

A validity query is answered by a (complex) digital signature in the OCSP case, and by a (trivial) table look-up in the case of the system described herein, as long as the CA stores the entire X-chain for each certificate.

Note that, with a population of 1 million certificates, the CA can afford to store the entire X-chain for each certificate when the time accuracy is one day or one hour. (In the first case, the CA would have to store 365 20-bytes values; that is, 7.3K bytes per cert, and thus 7.3B bytes overall. In the second case, 175.2B bytes overall.) If the time accuracy were 15 seconds, then each hash chain would consist of 1M 20-byte values, and for the entire system the overall storage requirement would be around 10.5 tera-bytes: a sizable storage.

To dramatically decrease this storage requirement, the CA may store just a single 20-byte value (i.e., $X_0$) for each cert, and re-compute from it each $X_i$ value by at most 1M hashings. Alternatively, Jacobsson [5] has found a surprising time/storage tradeoff. Namely, the CA may re-compute all n $X_i$ values, in the right order, by storing log (n) hash values and performing log(n) hashings each time. If n were 1M, this implies just storing 20 hash values per cert and performing only 20 hashings each time the cert needs validation. Other non-trivial tradeoffs are possible.

In sum, even in a de facto real-time application (i.e., using a 15-second time accuracy) the system described herein can, by just storing 400 bytes per cert, replace a complex digital signature operation with a trivial 20-hash operation.

## Security And Operating Costs

The last two differences are better discussed after specifying the type of implementation of the system described herein and OCSP under consideration.

## Security Analysis of Centralized Systems

Whenever proving certificate validity relies on the secrecy of a given key, a secure *vault* ought to protect that key, so as to guarantee the integrity of the entire system. By a centralized implementation of the system described herein or OCSP, we mean one in which a single vault answers all validity queries. Centralized implementations are preferable if the number of deployed certificates is small (e.g., no more than 100K), so that the vault could handle the query volumes generated even if almost all certificates are used in a small time interval, triggering almost simultaneous validity queries. In such implementations, the system described herein is preferable to OCSP in the following respects.

## Centralized System Offers Better Doomsday Protection

In the traditional OCSP, if (despite vaults and armored guards) an enemy succeeds in penetrating the vault and compromises the secret signing key, then he can both "resurrect" a previously revoked certificate and "revoke" a still valid one. (Similarly, if the CRL signing key is compromised in a CRL system.) By contrast, in the system described herein penetrating the secure vault *does not help an adversary to forge the validity of any previously revoked certificate.* In fact, when a certificate becomes revoked at day i, not only is its revocation proof Yo made public, but, simultaneously, all its $X_i$ values (or at least the values $X_0$ through $X_{365-i}$) are deleted. Therefore, after a successful compromise, an enemy finds nothing that enables him to "extend the validity" of a revoked certificate. To do so, he should succeed in inverting the one-way hash H on $X_{365-i}$ without any help, which he is welcome to try (and can indeed try without entering any secure vault). The worst an enemy can do in the system described herein after a successful compromise is to fake the revocation of valid certificates, thus preventing honest users from authenticating legitimate transactions. Of course, this would be bad, but *not as bad as enabling dishonest users to authenticate illegitimate transactions.*

## Security and Operating-Cost Analysis for Distributed Systems

Centralized implementations of systems require all queries about certificate validity to be routed to the same vault. This easily results in long delays and denial of service in applications with millions of active certificates. To protect against such congestion, delays, and denial of service, one might spread the load of answering validity queries across several, geographically dispersed, responder servers. However, in the case of the OCSP each additional responder needs to have a secret signing key, and thus needs to be hosted in a vault, making the cost of ownership of an OCSP system very onerous. A high-grade vault meeting the requirements of financial institutions costs at least $1M to build and $1M to run. (A good vault would involve armored concrete, steel doors, back-up power generators, protected fuel depot to run the generator for potentially a long time, etc. Operating it would involve a minimum of 4 different teams for 24X7X365 operations, plus managerial supervision, etc.) In an application requiring 10 such vaults to guarantee reasonably fast response at peak traffic, the cost of ownership of the OCSP system would be $10M of initial investment and an ongoing budget of $10M/year. Even if less secure vaults and operations were used, millions of dollars in initial and ongoing costs would still be necessary.

In the case of the system described herein, however, a distributed implementation can be achieved with a single vault (which a CA would have anyway) and an arbitrary number of "un-trusted responders" (i.e., ordinary servers).

Let us see the exact details of a distributed system assuming, to be concrete, that (a) there are 10M certs; (b) there are 1,000 servers, strategically located around the globe so as to minimize response time; and (3) the time granularity is one-day.

Distributed CA Operations *(Initialization Cost)*

Every morning: Starting with the smallest serial number, compile a 10M-entry array F as follows: For each certificate C having serial number j, store C's 20-byte validity/revocation proof in location j. Then, date and sign F and send it to each of the 1,000 servers.

Distributed User Operations *(Query Cost)*

To learn the status of a certificate C, send C's serial number, j, (and CA ID if necessary) to a server S.

Distributed Server Operations *(Answer Cost)*

Every morning: If a properly dated and signed array F is received, replace the old array with the new one.
At any time: answer a query about serial number j by returning the 20-byte value in location j of the current F.

Distributed Works

*1. Preparing Array F is instantaneous.*

If the whole hash chain is stored for each cert, then each entry is computed by a mere table look-up operation. (Else, it can be computed on the spot by using Reyzin's method.)

*2. F contains no secrets.*

It consists of the accurate and full account of which certificates are still valid and which revoked. (The CA's goal is indeed making this non-secret information as public as possible in the most efficient manner)

*3. Transferring F to the servers is straightforward.*

This is so because F contains no secrets, requires no encryption, and poses no security risks. Though 10M certs are a lot, sending a 200M-byte file to 1000 servers at regular intervals is very doable. *4. Each server answer is 20-byte long.*
Again, each answer requires no encryption, signature or time stamp.

*5. No honest denial of service.*

Because each value sent is just 20-byte long, because each such a value is immediately computed (by a table look up), and because the traffic can be spread across 1000 servers, no denial of service should occur, at least during legitimate use of the system. *6. Servers need not be trusted.*
They only forward 20-byte proofs received by the CA. Being self-authenticating, these proofs cannot be altered and still hash to the relevant fields.

Distributed System Offers Better CA Security

A distributed system like that described herein continues to enjoy the same doomsday protection of its centralized counterpart: namely, an enemy successfully entering the vault cannot revive a revoked certificate. Sophisticated adversaries, however, refrain from drilling holes in a vault, and prefer software attacks whenever possible. Fortunately, software attacks, though possible against the distributed/centralized OCSP, cannot be mounted against a distributed version of the system described herein.
In the OCSP, in fact, the CA is required to receive outside queries from untrusted parties, and to answer them by a digital signature, and thus by means of its precious secret key.
Therefore, the possibility exists that OCSP's required "window on the outside world" may be maliciously exploited for exposing the secret signing key.
By contrast, in a distributed version of the system described herein there are no such "windows:" the CA is in the vault and never receives or answers any queries from the outside; it only outputs non-secret data at periodic intervals. Indeed, every day (or hour) it outputs a file F consisting of public information. (The CA may receive revocations requests from its RAs, but these come from fewer trusted entities via authenticated channels ---e.g., using secure smart cards.) The untrusted responders do receive queries from untrusted parties, but they answer those queries by means of their file F, and thus by public data. Therefore, in a software attack against the system described herein ordinary responders may only "expose" public information.

Simplified PKI Management

PKI management (e.g., [7] [8]) is not trivial. The system described herein may improve PKI management in many applications by

- Reducing the number of issued certs;
- Enabling privilege management on the cert; and
- Sharing the registration function with multiple independent CAs.

Let us informally explain these improvements in PKI management in a series of specific examples. (Note that features and techniques used in one example can be easily embedded in another. We do not explicitly do this to avoid discussing an endless number of possible variations.)

Turning a Certificate ON/OFF (and Suspending It)

Example 1: Music Downloading

Assume an Internet music vendor wishes to let users download any songs they want, from any of its 1000 servers, for a $1/day fee. This can be effectively accomplished with digital certificates. However, in this example, U may be quite sure that he will download music a few days of the year, yet he cannot predict *which* or *how many* these days will be. Thus the Music Center will need to issue for U a different one-day certificate whenever U so requests: U requests such a certificate and, after payment or promise of payment, he receives it and then uses with any of the 1000 music servers on that day. Issuing a one-day cert, however, has non-trivial management costs both for the vendor and the user. And these costs must be duplicated each time the user wishes to enjoy another "music day."
The system described herein can alleviate these costs as follows. The first time that U contacts the vendor, he may be issued a certificate C with issue date $D_1=0$, expiration date $D_2= 365$, and a validity field $\mathbf{X_{365}}$, a revocation field $\mathbf{Y_1}$, and a suspension field $\mathbf{Z_{365}}$. (The vendor's CA builds the suspension field very much as a validity field: by starting with a random 20-byte value Zo and then hashing it 365 times, in case of one-day granularity. It then stores the entire hash chain, or just $Z_0$, or uses a proper time/storage method to be able to generate any desired $Z_i$.) At day i=1,...,365, if U requests "a day of music" for that day, then the vendor simply releases the 20-byte value $X_{365-i}$ to indicate that the certificate is valid. Else, it releases $Z_{365-i}$ to indicate that the certificate is "suspended." Else, it releases $Y_0$ to indicate that the certificate is revoked. Optionally, if U and the music vendor agree to --saya "week of music starting at day i," then either the 20-byte values for those 7 days are released at the proper time, or the single 20-byte value $X_{365-i-7}$ is released at day i.
That is, rather than giving U a new single-day certificate whenever U wishes to download music, the vendor gives U a *single, yearly* certificate. At any time, this single certificate can be turned ON for a day, by just releasing the proper 20-byte value. Thus, for instance, the system described herein replaces issuing (and embedding in the user's browser) 10 single-day certificates by issuing a single yearly cert that, as it may happen, will be turned ON for 10 out of the 365 days of the year. The vendor could also use the method above to issue a cert that specifies a priori the number of days for which it can be turned ON (e.g., a 10-day-out-of 365 cert). Because it has a more predictable cost, such certs are more suitable for a gift.

Turning ON/OFF Many Certificates For The Same User

Example 2: Security-Clearance Management

Digital certificates work really well in guaranteeing that only proper users access certain resources. In principle, privileges could be specified on the cert itself. For instance, the State Department may have 10 different security-clearance levels, L1,...L10, and signify that it has granted security level 5 to a user U by issuing a certificate C like

$$C = SIG_{SD}(SN, PK, U, L5, D_1, D_2, ...)$$

Where again $D_1$ and $D_2$, represent the issue and expiration dates.

However, specifying privileges on the cert itself may cause a certificate-management nightmare: whenever its privileges change, the cert needs to be revoked. Indeed, the security level of an employee may vary with his/her assignment, which often changes within the same year. For instance, should U's security-clearance level be temporarily upgraded to 3, then the State Department should revoke the original C and issue a new cert C'. This task could be simplified somewhat by having U and thus C' retain the same public key (and expiration date) as before; for instance, by having

$$C' = SIG_{SD}(SN', PK, U, L3, D_1', D_2, ...).$$

However, U still faces the task of "inserting" the new C' into his browser in a variety of places: his desk-top PC, his lattop, his cell phone, his PDA, etc. Now, having the CA take an action to re-issue a certificate in a slightly different form is one thing, but counting on users to take action is a totally different thing.

This management problem is only exacerbated if short-lived certificates (e.g. certificates expiring one day after issuance) are used. In the context of the present example, single-day certs may enable a State Department employee or user U to attend a meeting where a higher security level is needed. (If U had such a cert in a proper cellular device, smart card or even mag stripe card, he could, for instance, use it to open the door leading to the meeting that day.) The use of short-lived certificates is much broader, and has been advocated because it dispenses with the difficulty of revocation to a large extent (no point revoking a cert that will expire in 24hours, at least in most applications). However, issuing short-lived certs so that they reside in all pertinent users' browsers still is a management cost.

These management costs can be alleviated with use of they system described herein as follows. Assuming that one-day time accuracy is enough, the State Department issues to a user U a certificate containing 10 validity fields and 1 revocation field: e.g.,

$$C = SIG_{SD}(SN, PK, U, D_1, D_2, A_{365}, B_{365}, C_{365}, D_{365}, E_{365}, F_{365}, G_{365}, H_{365}, I_{365}, J_{365}, Y_1,)$$

where the first validity field, $A_{365}$, corresponds to security-clearance level 1 ... and the 10th validity field, $J_{365}$, corresponds to security-clearance level 10, while, as usual, $Y_1$ is C's revocation field. Cert C is used as follows. If, on day n, U is in good standing (i.e., cert C is still valid), and U's security-clearance level is 5, then the State Department publicizes (e.g., sends to all its responders in a distributed implementation) the 20-byte validity proof $E_{365-n}$. If, on day m, U's security-clearance level becomes 2, then the State Department publicizes $B_{365-m}$. And so on. As soon as C becomes invalid (e.g., because U is terminated as an employee or because U's secret key is compromised), then the State Department publicizes $Y_0$ (and erases "future" A, B, C, D, E, F, G, H, I, and J values from its storage).

This way, cert C, though internally specifying its own privileges, needs *not* be revoked when these privileges change in a normal way, and users need *not* load new certs in their browsers. In essence, the system described herein has such minimal footprint, that a CA (rather than issuing, revoking, and re-issuing many related certs) can issue with great simplicity a single cert, having a much higher probability of not being revoked (because changes of security-clearance level do not translate into revocation). As a result, fewer certs will end up been issued or revoked in this application, resulting in simpler PKI management.

In sum,
*the system described herein replaces the complex certificate management relative to a set of dynamically changing properties or attributes by a single certificate (with minimum extra length) and a single 20-byte value for attribute.*

Telecom companies may use a method similar to that of Example 2 to switch a given wireless device from one rate plan to another, or for roaming purposes.

Landlord CAs and Tenant CAs

A main PKI cost is associated to the RA function. Indeed, identifying a user U may require an expensive personal interview and verifying that indeed U knows the right secret key (corresponding to the to-be-certified public key PK). It would be nice if this RA function could be shared across many CAs, while enabling them to retain total independent control over their own certs.

Example 3: Organization Certificates

The Government and big organizations consist of both parallel and hierarchical sub-organizations: departments, business units, etc. An employee may be affiliated with two or more sub-organizations. For instance, in the U.S. Government, he may work for NIST and the Department of Commerce. Issuing a digital certificate for each such affiliation results in a high total number of certificates and a complex PKI management: every time an employee drops/adds one of his/her affiliations, it is best to revoke the corresponding cert/issue a new one. Ideally, two opposites should be reconciled: (1) The Organization issues only one cert per employee, and (2) Each Sub-Organization issues and controls a separate cert for each of its affiliates.

These two opposites can be reconciled by the system described herein as follows. To begin with, notice that the system described herein is compatible with de-coupling the process of certification from that of validation, the first process being controlled by a CA and the second by a validation authority (VA). For instance, assuming a one-day time accuracy, once a CA is ready to issue a certificate C with serial number SN, it sends SN to a VA, who selects Yo and $X_0$, secretly stores the triplet (SN, Y0,X0), computes as usual $Y_1$ and $X_{365}$, and then returns $Y_1$ and $X_{365}$ to the CA, who includes them within C. This way, the CA need not bother validating C: the CA is solely responsible for identifying the user and properly issuing C, while the VA is the only one who can prove C valid or revoked. This de-coupling may be exploited in a variety of ways in order to have *organization certificates* that flexibly reflect internal sub-organization dynamics. The following is just one of these ways, and uses Government and Departments as running examples. The Govermnent as a whole will have its own CA, and so will each Department.

Envisaging k different Departments with corresponding CAs, $CA^1...CA^k$, and one-day time accuracy, a Government certificate C has the following form:

$$C = SIG_{GOV}(SN, PK, U, D_1, D_2, X_{365}, Y_1, [X_{365}^1, Z_{365}^1], \ldots, [X_{365}^k, Z_{365}^k])$$

where, as usual, SN is the cert's serial number, PK the public key of the user, U the user's identity, $D_1$ the issue date, $D_2$ the expiration date, $X_{365}$ the validity field, $Y_1$ the revocation field, and where
$X_{365}^j$ is the validation field of $CA^j$; and
$Z_{365}^j$ is the suspension field of $CA^j$.

Such a certificate is generated by the Government CA with input from the Department CAs. After identifying the user U and choosing a unique serial number SN, the issue date $D_1$, and the expiration date $D_2$, the Government CA sends SN, PK, U, $D_1$, $D_2$ (preferably in authenticated form) to each of the Department CAs. The jth such CA then

- chooses two secret 20-byte values $X_0^j$ and $Z_0^j$,
- locally stores (SN,PK,U, $D_1$, $D_2$, $X_0^j$, $Z_0^j$) or, more simply, (SN, $X_0^j$, $Z_0^j$); and
- returns $[X_{365}^j, Z_{365}^j]$ for incorporation in the Government certificate in position j (or with. "label" j).

This certificate C is managed with a distributed version of the system described herein as follows, so as to work as a 1-cert, a 2-cert,..., a k-cert; that is, as k independent certs, one per Department. On day n, envisaging 100 responders,

- the Government CA sends all 100 responders the 20-byte value $X_{365-n}$ if C is still valid, and $Y_0$ otherwise.
- the jth Department CA sends all 100 responders the 20-byte value $X_{365-n}^j$ to signify that C can be relied upon as a j-cert and $Z_{365-n}^j$ otherwise.

Therefore, the Government CA is solely responsible for identifying the user and issuing the certificate, but each of the Department CAs can *independently* manage what de facto is *its own* certificate. (This is absolutely crucial. If $CA^1$ were the Justice Department and $CA^2$ the DOD, then, despite some overlapping interests, it is best that each acts independently of the other.) The resulting certificate system is very economical to run. First, the number of certs is greatly reduced (*in principle,* there may be just one cert for employee). Second, a given employee can leave and join different Departments without the need of revoking old certs or issuing new ones. Third, different Department CAs may share the same responders. (In fact, whenever the mere fact that a given user is affiliated with a given Department is not a secret -something that will be true for most departments-- the servers essentially contain only "publishable information".) Thus a query about the status of C as a j-certificate is answered with two 20-byte values: one as a Government cert and one as a j-cert. This enables one to more nimbly revoke C at a "central level" (e.g., should U lose the secret key corresponding to PK).

Possible Alternatives

In the above example, certificate C was only revocable in a central way, but it could easily be arranged that the responsibility of revocation is push down to individual Departments. For instance, to enable the jth Department CA, in full autonomy, to revoke as well as suspend C as a j-certificate, C may take the following form:

$$C = SIG_{GOV}(SN, PK, U, D_1, D_2, [\ X_{N1}^1, Y_1^1, Z_{N1}^1], \ldots, [\ X_{Nk}^k, Y_1^1, Z_{Nk}^k]\ ).$$

Also, different departments may have different time accuracies for their own certs. This too can be easily accomplished by having C of the following format,

$$C = SIG_{GOV}(SN, PK, U, D_1, D_2, [TA^1, X_{N1}^1, Y_1^1, Z_{N1}^1], \ldots, [TA^k, X_{Nk}^k, Y_1^1, Z_{Nk}^k]\ )$$

where
$TA^j$ is the time accuracy of the jth CA; and
Nj is the number of time units between $D_1$ and $D_2$. (E.g., if $TA^j$ is one day and $D_1 - D_2 = 1$ year, then $X_{Nj}^j = X_{365}^j$.)

Landlord CAs, Tenant CAs, and Leased Certs

Within a single organization, one major advantage of issuing certs structured and managed as above consists in enabling the cert to stay alive though the user moves from one sub-organization to another. It should be realized, however, that the above techniques are also applicable outside a single-organization domain. Indeed, the Government CA can be viewed as a *landlord, CA,* the k Department CAs as *tenant CAs* servicing *unrelated* organizations (rather than sub-organizations), and the certificate can be viewed as a *leased cert.* This terminology is borrowed from a more familiar example where the advantages of "joint construction and independent control" apply. Leased certs are in fact analogous to spec buildings having the identical floor footprints. Rather than building just his own apartment, a builder is better off constructing a 20-floor building, setting himself up in the penthouse apartment and renting or selling out right the other floors. Each of the 20 tenants then acts as a single owner. He decides in full autonomy and with no liability to the builder whom to let into his flat, and whom to give the keys. A 20-story building is of course less expensive than 20 times a single-story one: it may very well cost 10 times that. This economy of scale is even more pronounced in a leased cert. Indeed, the cost of issuing a regular cert and that of issuing a leased one is pretty much the same. Thus issuing leased certs could be very profitable to a landlord CA, or at least repay it completely of the costs incurred for its own certs. On the other hand, tenant CAs have their advantage too, in fact

    *1. they save on issuance costs:* they share the cost of issuing a cert k ways; and
    *2. they save on infrastructure costs:* they share the same responders (since they contain only public data).

Natural candidates to act as landlord CAs for external tenant CAs are:

•   credit card companies;
•   large financial institutions, and again
•   the Government (e.g., via the USPS or the IRS).

In many cases, in fact, they have long and close relationships with millions of "users" and may more easily issue them a digital cert without investing too many resources for user identification (e.g., a credit card company has been sending bills for years to its customers, and can leverage this knowledge). A credit card company may like the idea of issuing certificates as a landlord CA in order to run more effectively its own affinity program (having hotel chains, airlines etc. as their tenants). The IRS may have already decided to use digital certificates, and leased certs may later on provide them with a revenue stream that will repay of the costs incurred for setting up a faster and better service.

Future Tenant CAs

So far, the way we have described landlord and tenant CAs requires that the landlord CA cooperates with its own tenant CAs during the issuance process, and thus that it has already identified its tenant CAs beforehand. It is actually possible, however, for a landlord CA to issue rental certs, envisioning -say-100 tenant CAs, without having identified all or any of these tenants. Rather, future tenant CAs will be able to rent space in already issued certs. This capability is ideal for new cert-enabled applications. Rather than undergoing the expenses necessary to issue certs to millions of customers, a company offering a new certificate-enabled product may approach a landlord CA having issued millions of certs, rent space in them *after the facts,* and then sign on as customers a large portion of the landlord-CA users by *turning ON* all their corresponding certs *overnight* (without any customer identification and other issuing costs) and then starting managing them according to its own criteria. We shall describe various techniques for enabling this functionality below. For simplicity of exposition, we shall call L the landlord CA and envision that a tenant CA, T, just gains control in the future of a validity field (e.g., the 51st validity field) in all already issued k-certs, enabling T to prove the validity of "his own cert." However, as we have seen above, T may also have additional fields of his own: e.g., his own revocation field and/or his own suspension field. These fields are however handled in a way similar to that of the validity field and are thus not directly discussed.

An important property that we wish to capture is that the landlord CA does not incur liabilities for the management of T's certs. The key to ensure this property is that only T knows the H-inverses of his own validity fields and thus only T can prove valid his own certs, and cannot accuse L of divulging crucial information that causes a mismanagement of T's (rented) certs.

Assume, without loss of generality, that L wishes to have 100 tenant CAs, and that 50 of them, T1,...,T50, have already "signed up" as tenant CAs and additional 50 tenant CAs may sign up in the future. The first 50 CAs may have already provided L with their own validity fields so far (and they as well provide L with all their validity fields in certificates to be issued by L in the future). Then, L will compute the validity fields to be assigned to future tenant CAs in a way that guarantees that L does not know, except for the validity field themselves of course, the corresponding H-chains leading to the validity fields (by an H-chain we mean the sequence of values starting with an X0 and ending with a validity field).

For instance, a secure-hardware device D may be used to generate each H-chain, output the validity field, and keep secret inside the initial value $X_0$ (or the entire H-chain, or part of it). The output validity field is then inserted in a certificate C that L issues as one of the last 50 validity fields of C. Preferably, a separate device D51 will be used to generate all 51st validity fields in L's certs, a separate device D52 for generating all 52nd validity fields in L's certs, and so on.

Alternatively, L may have a third party B generate the H-chains, provide L with their corresponding validity fields and keep the rest of the H-chain secret, or keep the corresponding $X_0$ secret and erase the rest of the H-chain. Preferably, there will be different third parties: for instance, B51 will be in charge of generating the 51st validity fileds, B52 will generate the 52nd validity fields, etc. Such parties Bi, may themselves use secure-hardware to generate the ith H-chains, to ensure that they are not going to leak future proof of validity of the "ith Certs" (i.e., the certs whose validity is proved with the ith validity field) deliberately, inadvertently, or because subject to a malicious attack.

Alternatively yet, each H-chain may be generated by a multiplicity of third parties (e.g., A1,A2,A3, A4 and A5), so that the corresponding validity field is easily computed and output, while its H-chain is not known to or easily computable by any individual third party (e.g. each Aj individually), but is computable easily by all third parties together (based on secret information they possess).

In the simplest embodiment, a validity field X could be so computed by two parties A1 and A2: A1 computes his own H-chain having $X^1$ as the last value; A2 computes his own (ideally equally long) H-chain having $X^2$ as the last value, and X is then set to be a combination of $X^1$ and $X^2$. (For instance X is chosen as the concatenation of $X^1$ and $X^2$: $X = X^1, X^2$; or $X = H(X^1, X^2)$; or $X = X^1 + X^2 \mod 2^{160}$, or each bit of X is the sum mod 2 of the corresponding bit of $X^1$ and $X^2$. In the first case, the jth inverse of X in the "resulting chain" is defined to be the concatenation of the jth inverse of $X^1$ with the jth inverse of $X^2$. In the second case, the jth inverse of X is defined to be the concatenation of two values such that hashing the first j times and hashing the second j times and hashing together their results yields X. In the third case, the jth inverse of X is defined to be the concatenation of two values such that hashing the first j times and hashing the second j times and adding together their results mod $2^{160}$ yields X. In the fourth case, the jth inverse of X is defined to be the concatenation of two values such that hashing the first j times and hashing the second j times and taking the sum mod 2 of each of their resulting bits yields the corresponding bit of X.)

Preferably, such a (resulting) H-chain should not be known or easily computable by not just to a single third party, but even to/by special subgroups of third parties (e.g., any group of 3 third parties should not be able to compute a chain in any reasonable amount of time, even if its members collaborate in any fashion and share all the information in their possession). This ensures that even if more than one third party is malicious, then each H-chain (except for the validity field of course) remains secret. Preferably too, such a H-chain should be easily computable not just by all third parties, but by some other special subgroups of the third parties (e.g., any subgroup of 4 or more third parties). This ensures that even if some third party becomes malicious or unavailable, the H-chain could still be computed. Several such methods are known in the cryptographic literature. As further protection, secure-hardware may be used by the third parties or groups of third parties so as to ensure that H-chains corresponding to validity fields inserted in L's certs (in positions 51 through 100) are not leaked deliberately, inadvertently, or as a result of a malicious attack.

Assume now that a tenant CA, e.g., without limitation intended T51, contacts L to gain control of the 51st validity field in each cert C of L, so as to be able to manage the corresponding cert "C51" on his won. This is accomplished by providing T51 with all 51st H-chains, or with their initial $X_0$ values. This is doable because all such chains/initial values are in secret storage and could be delivered to T51, preferably in a way that makes the relevant H-chains known only to T51. For instance, if the H-chains are stored in a special secure-hardware device D, then, under tight control, D may deliver the H-chains to T51. For instance, D may be delivered to T51, and then a special signal (e.g. a special password, a digital signature, a digital signature relative to a public key securely embedded into D) can be input to D (e.g., by L) so that D would output the desired secrets. Better yet, D should be manufactured so that more than one special signal would be needed.

If the same secure device D securely stores secrets relative to other validity fields (e.g., the 52nd validity fields), then D may, under tight control and special signals deliver only the 51st secrets to T51, or it may deliver the 51st secrets to a second secure device D' (e.g., a secure smart card) which will then be delivered to T51, and then other special signals may induce D' to output or make available its available secrets into T51's environment. Better yet, D may, under tight control and special signals deliver different pieces of information to different secure devices (e.g., two secure devices D' and D"), and then these secured devices can be brought (preferably by independent routes, to T51, where they would under tight control and special signals release in T51's environment their pieces of information so that the proper secrets would be easily reconstructed from them.

Alternatively, D may under tight control and special signals deliver the proper secrets to T51 encrypted in a key known to T51. (For instance, T51 may generate a special public-secret key encryption pair, the public key may be input to D -e.g., digitally signed, say, by L-- and then, possibly after additional special signals, D may output the proper 51st secrets encrypted with T51's special public encryption key. T51, and only T51, will then easily decrypt and obtain the 51st secrets.)

If a third party has generated the hash chains, then, after due control and authorization, the third party may take appropriate steps (e.g., steps discussed above) so as to privately deliver the 51st secrets to T51.

If a group of third parties collectively know the 51st H-chains, then sufficiently parties in the group may individually and securely deliver to T51 the information in their possession so that T51 may privately enter in possession of such H-chains or of information that enables him quickly to recompute such H-chains.

A secure device here should be construed to include a secure facility in which all relevant computations take place.

An Embodiment

This procedure can be greatly simplified by having a future tenant CA enter in possession not of all chains or their initial values, but of just one value (or a few values) from which he can reconstruct all chains. One way to accomplish this economy is the following. L has a secret seed S51, from which it computes all the 51st H-chains. Whenever L wishes to embed the 51st validity field in a cert C, L may use S51 and information associated to C so as to generate an initial value X0 that is essentially unique to C. For instance, L could generate C's initial value for the 51st H-chain, $X_0$, on inputs $S^{51}$ and C's serial number SN: without limitation intended, L could simply choose X0=H($S^{51}$,SN). Then only this seed $S^{51}$ needs to be delivered to T51 in the future: from it T51 can then generate the H-chain of each of "his cert." For instance, to generated the value Xj of the cert with serial number SN, T51 simply computes X0=H($S^{51}$,SN) which is just one hash, and then computes Xj by just j additional hashings.

This method can be advantageously combined with any of the methods described above. For instance, a secure device D may just safe keep only $S^{51}$, compute from it all desired H-chains and validity fields, and then release $S^{51}$ in T51's hands when the right time comes. In particular, two third parties A1 and A2 may generate their own "half" of all 51st H-chains: A1 using a seed $S1^{51}$ and A2 using a seed $S2^{51}$. In particular, A1 can generate the initial value of the 51st chain of a certificate C with serial number SN by computing H($S1^{51}$,SN), and A2 by computing H($S1^{51}$,SN). Each of them then returns his own half of the final validity field to L, L then combines them to produce C's 51st validity field (e.g., by a single hash or a single modular addition as indicated above). When the future tenant CA appears, then A1 will be responsible to convey $S1^{51}$ to T51 and A2 to convey $S2^{52}$ to T51.

Activation of Tenant Certificates

The fact that a lease certificate may in one stroke generate millions of tenant certificates may not mean that all of them are "active." Indeed, if to enjoy the benefits of a tenant certificate a user U needs to pay certain dues to the tenant CA T, then U's consent would be needed. (T might initially waive or significantly reduce the dues of its tenant certs, but eventually has to decide which users should have them "long term.") Having U contact --- e.g., in person or in writing-T may not be convenient at all, and having U just generically indicate his consent may generate false representations and lots of confusion. It is here that the original cert issued by landlord L may play a very beneficial role. Namely, if T inherits (in its standard tenant cert) the same public key PKU certified within L's original cert C as U's public key, then T may use PKU (and thus C) to establish U's consent. For instance, U may contact T for "turning on" his own tenant cert and his consent can be established by having T challenge U with a random string R, and have U respond by returning R's digital signature relative to PKU. (If PKU is the public key of an encryption scheme, then E may challenge U with the encryption -with key PKU-of a random string R, and see whether the challenge in responded with the string R in the clear or encrypted in a key known to T.) Because C can be verified by T (with L's public key) and because T trusts that L properly identified U prior to issuing C, the proper response about R proves to T that he is dealing with someone knowing the secret key corresponding to the public key PKU, and thus with U. Therefore, E may activate its own tenant certificate for U. One way to implement such activation is having T offer to its tenant users a deadline to properly request activation of their T-tenant certificates. Up to the deadline, T, managing its own validation/revocation process, will ensure that all inquiries about its own tenant certs will receive a validity answer. At or after the deadline, all those users who do not properly request activation will have their certificates revoked, while the others' tenant certificates will continue to be valid. Another way to activate the tenant certificates of requesting users may be accomplished by having T put all its new tenant certs on "suspension", and then make valid those certs whose users are willing to pay for/properly request activation.

Two-Party Validation

There is another use of the system described herein that provides an additional advantage: namely, two-party validation. In the OCSP, once a user presents his certificate to a relying party, he intends to conduct a two-party transaction. But the OCSP transforms this transaction in a 3-party one, by querying a third party about the user's certificate. This makes each transaction more complex and more expensive. The system described herein instead enables transactions to remain essentially two-party. Namely, a user may -e.g., at midnight receive a 20-byte proof of the validity of his certificate for the remainder of the day. (This 20-byte value can be obtained upon request of the user, or pushed to the user's cellular device automatically -e.g., by means of a SMS message or other control message.) Due to its trivial length, this proof can be easily stored in most cellular telephones and PDAs. Then, whenever the user wants to transact on that day, the user simply sends its own certificate *together with* the cert's 20-byte proof of validity for that day. Because the proof of validity is universally verifiable, the verifier of the cert and proof need not call any CA, any responder, or any third party. (From such a call it may only receive the same proof of validity that he now receiving from the user directly.) The verifier can work totally off-line. In the cellular environment, in which any call translates into money and time costs, this off-line capability is of great value. Such two-party validation could also be implemented when the user's cert resides in other platforms, such a PC or a lap-top (where the user can receive his proof of current validity through the Web or the Internet), or a smart card, where the daily proof of validity can be delivered via a card reader (e.g., from the Internet or a private database). In particular the user's current proof of validity can be delivered to the user (or user's device) by the relying party. That is, a user may contact a relying party for a transaction requiring his certificate. For instance the user may present his certificate to the relying party, or the relying party may have in storage a copy (e.g, from a prior transaction). The user does not, however, present his proof of current validity (e.g., because he does not have it yet). The relying party requests and receives the current proof of validity for the user cert (e.g., from a responder), verifies it, and, as a favor, also sends the user his current proof of validity. The user then caches this proof and then forwards it to any relying party he transacts with in the remainder of the day, thereby making all those other transactions two-party.

Another setting where this capability is of great value is that of physical security. For instance, in this application the relying party to which the user presents his cert could be the control mechanism of a door to which the user presents his certificate together with his current proof of validity. This presentation can be done in a variety of ways. For instance, the user's cert and validity proof for the day may reside in a smart card of the user, that he may swipe through a card reader (if it is not a contact-less one). The cert in the card testifies that the user has the right to go through that door, and the current proof of validity that he has that right that day. The door can, therefore, realize that the user is fully authorized to enter through that door at that time by just performing a local verification (e.g., verifying the cert and the proof of validity that day), without any call to any third party. This is a much more attractive solution to having the door connected via a secure network to a secure database where the knowledge of who is currently authorized resides. Indeed, should the door be in a public and large area such an airport or a large office building, it would not be quite clear what a secure network may mean in such a setting, and in any case it would be very expensive to provide such a secure-network connection.

Transferring the daily proof of validity onto the user's card may be easily accomplished by having the user swipe his card at a "wired" card reader at the airport/building main entrance. Providing a secure network connection to just one or a few such readers may be affordable. But after the user checks in any of such few special location his card will load the validity proof for the remainder of the day, which he then will use in a two-party mode as explained above at any other secure (but without secure-network connection) door in the airport/building. This will dramatically lower the expenses of installing and maintaining secure-network access.

The granularity and security of the system is in sharp contrast to quite recent practices at airports, where all access badges were revoked and reissued only when a third of the total badges were lost or invalidated. So much in fact was the cost of managing such access.

These two-party applications may work very well with the system described herein, but may be enjoyed by any other system in which a cert has a universally verifiable and cacheable proof of validity that lasts for a specified amount of time.

Of course, a user's cert needs not be devoted to open just a given door or to grant wide airport/building access. The user cert may have different validity fields (each possibly coupled with its revocation and suspension fields). One of these fields may be devoted to access a given door or doors, another to access different door(s), another to generally access certain areas of the airport/building/complex etc.

## Part II

### Tenant CAs

A digital certificate C (cert for short) consists of the digital signature of an authority A, typically a certification authority (CA), securely binding together various pieces of data (the certified data): for instance, without limitation intended, a serial number SN (preferably unique to the certificate, at least among the certificates issued by A), a user identifier U, a user public key PKU, the issue date ID, the expiration date ED, and additional information AI: C=SIG_A(SN,U,PKU,ID,ED,AI).

The additional information may be organized in any number of additional fields, or empty. For instance, AI may contain an identifier for A, the digital signature used by A to sign C, the public digital signature key of A, possibly in a certified manner, etc.

It is desirable that A issues C only after U is properly identified (an operation hopefully including the verification that U knows the secret key corresponding to PKU is also verified). A certificate C is valid on its issue date and invalid on its expiration date, but, in between, its validity is unclear, because a certificate may be revoked for a variety of reasons. (E.g., U looses the secret key corresponding to PKU, misuses his certificate, commits fraud, no longer pays his dues, or no longer is a customer or an employee of an enterprise that was behind C's issuance). Because of the possibility of certificate revocation, validating a certificate (i.e., proving that it is currently valid) is crucial at every transaction. A variety of certificate validation/revocation techniques have been developed; in particular, CRLs (certificate revocation lists), the OCSP (the Online Certificate Status Protocol), and the efficient certificate status protocol of U.S. Patent 5,666,416.

A certificate is expensive to issue, because, in particular, user identification may be expensive (e.g., may require a personal "interview"). If each of n authorities/entities. E1, E2, ... , En, wished to issue its own certificate to U, then n identification processes would be required. To solve this and other problems we put forward various *tenant-CA* techniques. Loosely speaking a tenant CA is an entity that de facto becomes/performs its CA functions in a much easier and economical way, capitalizing of the efforts of another CA, the *landlord CA.*

### External Tenant CAs

In an external tenant-CA system, a landlord CA A issues its own certificates C as usual (i.e., without embedding in them special features to enable tenant CAs), and uses separate techniques to empower its own tenant CAs. For instance, A's certificates may have the form C=SIG_A(SN,U,PKU,ID,ED,AI). To enable an entity E to become a tenant CA, A issues a lease certificate. A lease certificate, LC, consists of data digitally signed by the landlord CA (or by a third party on behalf or with the consent of the landlord CA) conveying that some or all of the certificates of A also are certificates of E. For simplicity, assume that all of A's certs should also become certificates of E. Then, at a high level, LC may take the following form:

LC = SIG_A("all certificates of A now become also certificates of E").

This can be expressed compactly using proper conventions. For instance, independent of the fields' order,

LC = SIG_A(A landlord, E TENANT,AI),

or assuming that A is known, specified in AI, or deducible from A's signature

LC = SIG_A(TENANT,E,AI),

(Note: Throughout this application we shall assume, for simplicity but without limitation intended, that the name of the signer is included or is easily obtainable from his/her/its digital signatures.) where, "TENANT" is a string indicating that LC is indeed a lease certificate, "E" is an identifier of the tenant CA, and "AI" is additional information organized in one or more fields. In this sample LC format, the fact that A is the landlord CA is deducible from the fact that A is the signer of the lease. The string TENANT too may not be included in the lease explicitly: one could deduce that A's signed data is a lease certificate from the special structure of the signed data itself. (In the sequel, for simplicity but without limitation intended, we shall assume all lease certificates implicitly identify the landlord CA, unless otherwise specified.) If a proper certificate lease is in place, then we shall refer to the resulting certificates of the tenant CA as *tenant certificates.* For successfully running a tenant-CA system, it is crucial to properly choose what pieces of information a certificate lease should specify, and thus in our chosen example compact format, the composition of AI. For instance, AI may specify

- date information (such as the start date of LC, the issuance date of LC, the time duration of LC, etc.);
- the subset of certificates of A that become also certificates of E (e.g., all certificates, or those certificates enjoying a given property -where the relevant subset can be specified by properly specifying just the property in question);
- what should be considered the certified data of E's certificates (e.g., A's certificates may certify many pieces of data about the user U -name, contact information, credit level, checking account number, etc.; however, E may want that only some of this information be considered certified data of its certificates -e.g., user name and address--- and at the same time may want to add other data to its own certified data-e.g., "user can be contacted at user@E.com"---; the reason behind redefining E's certified data is that A may be bound or be liable about different things than A);
- the basic properties of E's tenant certificates (e.g., privileges and obligations: A's certificates may endow their users with withdrawal privileges if A were a financial institution, but the corresponding E-certificates may only entitle their users enable to a given electronic service);
- the name of the E-cert (e.g., whether the E-cert is identified by the same serial number SN of the corresponding A-cert; or by (E,SN) ---that is by the name of the new CA and the same old SN--; or by (A,SN-E) -i.e., by the same CA-serial number pair of before, but with an indication of the tenant CA, etc.);
- an indication of whether the user public key of an E-cert is the same as that of the corresponding A-cert;
- revocation/validation information (e.g., the type of validation/revocation system used by the tenant CA; where to find E's validity/revocation information; etc.);
- the level of dependence of E's certificates from A's certificates (e.g., whether a E-certificate is always considered revoked when the corresponding A-certificate is revoked; or whether an A-cert must be revoked for a specific reason ---e.g., compromise of the user's secret key--- for the corresponding E-cert to also automatically revoked; or whether E manages its own tenant certs independently --- e.g., independently decides which tenant certs to validate and which to revoke).

In one embodiment,

- a tenant cert starts at the later of the lease date and original cert issue date and expires when the original cert does;
- all A-certs become E-certs;
- a standard subset of the certified data of an A-cert becomes certified data of the corresponding E-cert (e.g., fields 1,2,3,4, and 7 are considered fields of the tenant cert);
- the basic properties of the tenant certs;
- the tenant cert retains the same serial number of the corresponding A-cert, and is identified by an E-SN pair (if all of A's certs have distinct serial numbers, then the same will be true of E's tenant certs; thus, if E identifies a single entity/CA, then specifying E and the serial number SN will uniquely identify E's tenant certs within the universe of all certs);
- the tenant cert retains the same user public key of the corresponding A-cert (and thus the user retains the same secret key, all of which simplifies greatly the management and generation of tenant certs);
- a tenant cert is managed independently of the corresponding A-cert.

Adopting these choices makes a lease certificate very easy to issue, and a special identifier nay be used to indicate compactly the adoption of these choices: e.g.,

LC = SIG_A(E,STANDARDTENANT,AI),

where AI may now specify minimal information such as the basic properties of the E-leased certs, LC's date and E's validation/revocation method. Actually, if adopting the same validation/revocation system of A is made standard for E, then even the last piece of information can be omitted. Further, a standard lease certificate may not need to carry date information either. (Establishing the later of the LC's date and an A-cert issuance date may not matter for establishing the validity of a transaction relying on the corresponding E-cert. Because according to the current choice a tenant certificate is managed by E in a total independent way, in order to rely on a E-cert legitimately, one needs a current proof of its validity. In which case, E will not issue any such proofs with dates earlier than that at which the lease agreement has been issued, whether this date is certified within LC or not.) Finally, if the E-leased certs are verified by specialized E-servers, the basic tenant-cert property information needs not be specified in AI (and indeed there may not be an AI field).

A series of standardized options can be used, all having their own identifiers, such as STANDARDTENANT1, STANDARDTENANT2, and so on, and these identifiers can be used (implicitly or explicitly) just as STANDARDTENANT, thereby simplifying the construction and use of lease certificates and tenant-CA systems. An implicit indication of the options made can be derived by (the certificate of) the public key used by A to sign the certificate lease: the standard-landlord key, the standardl-landlor key, etc. In the sequel, for simplicity but without limitation, we shall assume that, unless otherwise specified, all tenant-CA relationships are standard ones, and that the special indicator string is not explicitly presented.

So far we have envisaged that the landlord CA may issue traditional certificates C, which it uses itself and leases to tenant CAs. However, it may be preferable for the landlord CA to issue special certificates SC whose purpose is to enable the tenant-CA capability. This may be so because, in its own certificates, the landlord CA may use certain certified data that is not appropriate to divulge or to "turn over" to a tenant CA. By issuing special certificates SC, the landlord CA has thus an opportunity to make available to tenant CAs and de facto embed (in full or in part) in tenant certificates only information that is proper to share. A landlord CA may produce special certs directly from scratch, or by essentially reissuing its own certs after editing their certified data. For instance, the landlord CA may obtain a special cert SC from an original, traditional cert C by keeping in SC the same user and user public key information of C, while adding/deleting/changing other fields.

Tenant CAs and lease certificates are very powerful constructs. If A has -say-- 10 millions certs, then a lease certificate may, in one stroke, give E 10 millions certs, without E having to identify 10 million users. Rather, E capitalizes on and actually "inherits" all the identification efforts of A. If A is a financial institution knowing very well its millions of customers, then A is in a position to provide E with an incredible amount of valuable certified data about its own users. Of course, A may do so only in exchange of significant benefits, under a proper agreement with E. In absence of such an agreement, A may legally and technically (e.g., by means of encryption) prevent E from illegitimately appropriating/ utilizing A's certificates/certificate information. On the other hand, a legitimate tenant relationship is going to be mutually advantageous. For instance, A may timely provide E with revocation information about its own certificates (e.g., which certs have been revoked because of the user loosing or repudiating his public key), and accept some liability if some type of information certified within its own certificates and relied upon E is wrong.

Upon reviewing a lease certificate, a verifier knows that a given certificate C issued by A to user U also is an E-tenant certificate. Assuming that the lease is a standard one, then the verifier also knows that E manages the corresponding tenant cert and the type of validation/revocation information used by E. However, the verifier may not know the public key used to verify the validity/revocation information of the E-tenant certs. This is particularly annoying because in some schemes, such as U.S. Patent Application 60/277,244, the user himself may present to a verifier the proof of validity of his own certificate (generated by E), thus if the verifier could know with public key to use to verify E's validity/ revocation information, the whole process would be particularly convenient. To enable such efficiency, it is advantageous that a lease certificate also certifies within it the public key PKE used by E to manage its tenant certs. This can be accomplished by making PKE part of the additional information of the lease certificate. If we wish to bring to the fore this crucial piece of information, a lease certificate may have the following form:

LC = SIG_A(E,PKE,STANDARDTENANT,AI).

This way a lease certificate is made a much more powerful and stand-alone instrument. A greater convenience is obtained by having special lease certificates, *compound lease certificates,* that is, a single, compact, digitally signed document establishing or vouching for a plurality of tenant CAs: E1,..,En. At a high level, a compound lease certificate CLC may have the following form:

CLC =SIG_A("all of A's certificates are also certificates of E1,...,En).

More compactly, for instance, we may have

CLC = SIG_A(STANDARDTENANT,E1,...,En,AI).

AI may specify the same additional information for all tenant CAs, or separate additional information for each tenant CAs, or some common and some separate additional information.

For instance, to emphasize the later two cases, we have use the forms

CLC = SIG_A(STANDARDTENANT,(E1,AI1),...,(En,AIn))

and

CLC = SIG_A(STANDARDTENANT,(E1,AI1),...,(En,AIn),AI).

Compound lease certificates are very convenient to update someone (e.g., a server) of the tenant-CA relationships of a landlord CA. For instance, a compound lease certificate may always include all current tenant CAs of the landlord, and thus by its date information (e.g., current date and date of the next update), a verifier may realize that it is dealing with the latest compound lease certificate, and thus with all possible legitimate CAs.

Certified Data in Original and Tenant Certificates

Each tenant cert of a tenant CA Ei may use part of the original certificate C (e.g., the serial number or PKU may be the same in both certificates), as well use different information (e.g., Ci may specify additional information that is especially important to Ei, such as which privileges Ci confers to its bearer/owner. This way n certificates C1,...,Cn can be made, capitalizing only on a single identification process: that used by A or on behalf of A when issuing the original certificate C. Having tenant CAs in mind, A may verify various attributes/properties of U and certify them within C. For instance, U's correct address, bank account number, level of credit etc. These properties checked and certified by A may be agreed in advance between A and some or all of the tenant CAs. The process presents additional advantages.

For instance, U may, for his own convenience, use the same PKU in some or all certificates Ci. Therefore, if he fears that his corresponding secret key is compromised, he may so inform A alone, and A may push this information to the tenant CAs (e.g., by revoking C and making this revocation information available to the tenant CAs). The external tenant-CA process may be further simplified by having some or all of the Ci certify the same information certified within C; that is, a new Ci may retain the same PKU as C, the same expiration date and the same additional information, and even the same serial number (thereby relying on A to choose distinct serial numbers). Ci may however identify Ei as the new issuer (and include only an indication, if so wanted, of the original issuer A). This way, the process of generating certificates C1,...,Cn may be quite fast and automatic. Each tenant CA Ei, given a certificate C issued by the landlord CA A, essentially "re-issues" it in its own name as a certificate Ci without any further checking, capitalizing on C's proper verification/identification process. Such re-issued certificate Ci may then be interpreted as saying that all privileges specified in C are now enjoyed with respect to Ei. For instance, if C specifies that the owner has the right to access the databases of the issuer (or is a preferred customer of the issuer), U will then be able, via Ci, to access the databases of Ei (or become a preferred customer of Ei). This streamlined process may be made more efficient and valuable to a tenant CA, by having the landlord CA provide a tenant CA not all the original certificates C, but only those satisfying a given property. For instance if landlord CA A is a financial institution making certificates for its own customers and the tenant CA Ei is a partner or a special branch of A, then A may pre-process the certificate stream it forwards to Ei -e.g., by filtering and forwarding to Ei only those original certificates C corresponding to customers having a given level of credit, or having never missed a payment, etc. Again, in any form of tenant Caship, it would be preferable that the (type of) information certified within C, be agreed in advance among landlord and tenant CAs. Indeed, rather than "getting a free ride on C" Ei preferably becomes a tenant CA of A with the agreement of A, and remunerating A for its efforts (e.g., that of issuing a correct initial certificate). To encourage proper remuneration (the "rent"), A may not publish revocation/validity information of C, but push it or made it available only to tenant CAs that honor their agreement (e.g., pay rent upfront, on a periodic manner, etc.). For instance, A may publish its own validity information encrypted in a key known only to a legitimate tenant CA. This way, entities that abuse of A's certificate-issuing efforts, may be at disadvantage when U's secret key is compromised. Of course, an entity A that has issued a certificate Ci may determine in its sole discretion whether to revoke or keep valid Ci. For instance, even if C is still valid, if U misbehaves with respect to Ei (e.g., U does not pay certain dues to Ei), then Ei may revoke Ci. Vice versa, A may revoke C (e.g., because U misbehaved with respect to A) and Ei may wish to keep Ci in force. The fact that each tenant CA Ei may have independent control over its own Ci enables further efficiency. For instance, rather than having U interact or contact Ei in order to issue Ci, Ei may in a systematic manner issue tenant certificate Ci for each certificate C issued by A. For instance, preferably after an agreement, A may send or otherwise make available to Ei, all certificate C it makes, and Ei may "re-issue" each such C as its own Ci. Assuming that Ci conveys certain privileges to its owner for which the owner needs to pay, and assuming that U has not yet decided to make such payment, then Ei, controlling Ci, may suspend Ci and activate it or making valid only when a specific step is taken by U or a specific agreement is reached by U. This way certificates Ci are already made and even distributed to proper places, making it more attractive for U to contact Ei for having Ci activated.

Tenant CAs may also be implemented without using traditional certificates, with greater efficiency. A may provide (e.g., periodically) a tenant CA Ei with a special certificate: a compound certificate C that enables Ei to produce multiple certificates Ci. For instance A may provide Ei with the compound certificate

C=SIG_A((PKU1,U1),...,(PKUj,Uj),AI)

That is, C binds together user U1 with public key PKU1, user U2 with public key PKU2, and so on. This special certificate vouches to Ei that, directly by A or indirectly, each user Ui has been properly identified as the right owner of PKUi. Using this compact compound certificate C, Ei may then issue its own certificate Ci for each user Ui it wants, for instance the certificate

Ci=SIG_Ei(SN, Ui, PKUi, IDi,EDi,AIi).

In the above example, AI can be a common additional information for all the Ui or the (Ui,PKUi) pairs. This information may then be used to compile the additional information of each AIi, in particular AIi=AI. Alternatively, AI may specify separate additional information for each user as well as common additional information (such as the date of issuance of C). In this case, we want to represent C in the following way

C=SIG_A((PKU1,U1,AI1),...,(PKUj,Uj,AIj),AI).

Each AIi may specify a serial number if PKUi and Ui were specified to be the public key and the user of a specific certificate with a specific serial number. Indeed, properly identifying j users, and then issuing a single compound certificate to vouch for such verification in a global way may be a good choice for a landlord CA. This spares A the computation of j different digital signatures, for example, as well the effort to choose and manage j distinct serial numbers. A compound certificate need not have serial numbers associated to each user in it, though it may have a serial number of its own, that is, a compound-certificate serial number that can be useful to identify or revoke the compound certificate (e.g., by means of a a compound CRL or a compound OCSP mechanism). On the other hand, A may issue a compound certificate about users U1,...,Uj and their public keys deriving the compound certified information from that individual certified information of j ordinary certificates. Indeed, if A has already issued such j certificates, it may prefer to send a tenant CA Ei a compound certificate so as to avoid revealing to Ei certain information about users U1,...,Uj contained in their individual certificates. It may be also the case that A acts indirectly as a landlord CA. That is, A issues j individual certificates, and then a second entity B uses the certified information of those j certificates to issue a compound certificate, e.g.,

C=SIG_A((PKU1,U1),...,(PKUj,Uj),AI)
or
C=SIG_A((PKU1,U1,AI1),...,(PKUj,Uj,AIj),AI)
made available to a tenant CA.

Activation of Tenant Certificates

The fact that a lease certificate may in one stroke generate millions of tenant certificates may not mean that all of them are "active." Indeed, if to enjoy the benefits of a tenant certificate a user U needs to pay certain dues to the tenant CA E, then U's consent would be needed. (E might initially waive or significantly reduce the dues of its tenant certs, but eventually has to decide which users should have them "long term.") Having U contact --- e.g., in person or in writing-E may not be convenient at all, and having U just generically indicate his consent may generate false representations and lots of confusion. It is here that the original cert (or special cert) issued by landlord A may play a very beneficial role. Namely, if E inherits (in its standard tenant cert) the same public key PKU certified within A's original cert C, then E may use PKU (and thus C) to establish U's consent. For instance, U may contant E for "turning on" his own tenant cert and his consent can be established by having E challenge U with a random string R, and have U respond by returning R's digital signature relative to PKU. (If PKU is the public key of an encryption scheme, then E may challenge U with the encryption -with key PKU-of a random string R, and see whether the challenge in responded with the string R in the clear or encrypted in a key known to E.) Because C can be verified by E (with A's public key) and because E trusts that A properly identified U prior to issuing C, the proper response about R proves to E that E is dealing with someone knowing the secret key corresponding to the public key PKU, and thus with U. Therefore, E may activate its own tenant certificate for U. One way to implement such activation is having E offer to its tenant users a deadline to properly request activation of their E-tenant certificates. Up to the dealine, E, managing its own validation/revocation process, will ensure that all inquiries about its own tenant certs will receive a validity answer. At or after the deadline, all those users who do not properly request activation will have their certificates revoked, while the others' tenant certificates will continue to be valid. Another way to activate the tenant certificates of requesting users may be accomplished by having E put all its new tenant certs on "suspension" (a capability offered by several validation/revocation methods), and then make valid those certs whose users are willing to pay for/properly request activation.

External Tenant CAs on a Per-Certificate Basis

Note that the last described tenant-CA system has several advantages; in particular, (1) it does not require the tenant CA to issue certs (it "inherits" those of the landlord CA), (2) it does not require the tenant CA to identify off-band its own users (which the landlord CA may instead do), and (3) offers users a simpler key management (they can have the same secret key in their original as well as in their tenant certs, rather than managing a plurality of secret keys, which not only is more complex to do, but often ---as in a cellular telephone application--- impossible due to severe memory limitations). However, it is possible to implement tenant-CA systems that enjoy just the two latter advantages, which are very significant in them selves. For instance, a landlord CA may not issue a lease certificates as envisaged above, rather it may agree in some other way to the fact that its certificates are used by a tenant CA to produce its own certs in a much more efficient and economical manner. For instance, under a proper agreement with the landord CA A, a tenant CA E may reissue in its own name some or all of the certificates of A. For instance, A my furnish E with a certificate
C = SIG_A(Field 1, Field 2, ... , Field k)
vouching for all of part of its certified data, and E may then issue its own version, C', of C:
C' = SIG_A(Field' 1, Field' 2, ... , Field' k')
where k' may or may not be equal to k (i.e., the tenant cert may have a different number of fields than the original cert), where certain fields of C' may be equal to fields of C, or modifications of fields of C (certain other fields may be totally new of "dropped"). For instance, a great benefit may be accrued by E by just retain the user-name field alone. That is, upon receiving an A-cert for a user U, E issues its own cert for user U (with whatever other certified data E deems proper). This gains E the considerable advantage of not having to identify (particular off-band, as by means of a personal interview) user U. Alternatively, E may retain in C' some other fields of C (e.g., financial information fields), whose verity it does not want (or may be incapable) to verify itself. Alternatively, E may insert in its tenant cert C' a pointer to (or bind them in some other way to) their corresponding A-cert C, so that a verifier of an E-cert may know that it should get at least certain portions of the tenant certified data from the indicated original cert. (Possibly the revocation/validity of these portions of certified data in C' are governed directly by A through the revocation/validation of C.) Particular fields of C that are useful for E to retain in C' may include the user public key field. That is, the same user U may use the same public key PKU both in C and in C'. One advantage to the user is, again, to simplify his key management. For instance, if for accessing the resources of A and E it is necessary to use a, respectively, A-cert and E-cert and perform a challenge-response identification, U may access an A-site (E-site), present his A-cert (E-cert) and respond to a challenge using its SKU key. If it is necessary for him to provide a signature relative to PKU, he can still do so in either case, possibly inserting into the data he signs an indication of the cert used (e.g., A-cert or E-cert, by specifying his CA-SN pair).

Also in this per-certificate approach, the landlord may provide its original certs to the tenant CA, and the tenant CA may then activate upon a proper request of the user (a process that again may involve indirect user identification, such as a challenge-response mechanism using the user public key of the original certificate.) Alternatively, this approach may be implemented by having the tenant CA issue a new cert C' corresponding to an original cert C only after user U properly requests so (where a proper request may involve identifying U using C). Again also for this tenant-certificate issuance proper consent of the landlord CA may be needed (either by a lease certificate, or by a lease relative to the particular C in question, or by some other agreement). It is desirable that the landlord CA registers, trademarks, or otherwise acquires rights to either C or certain certified data of C, so that a proper consent/agreement would be needed by the tenant CA in order to properly utilize C to issue a tenant certificate C'. In absence of a proper agreement the landlord CA may, for instance, back away form any liability about the certified data of C. An indication of C or of the landlord consent for utilization of C may be included within the corresponding tenant certificate C' to provide with a more self-sufficient electronic document.

Internal Tenant CAs

Another way to enable tenant certificates is for the landlord CA to issue certs C that specify *within their own certified data* their being tenant certificates (e.g., by specifying their tenant CAs). We call such certificates *double certificates,* to signify that each C may be both an original landlord cert as well as one or more tenant certs. Double certs may be more advantageous than external tenant-CA systems, both when implemented on a per-certificate basis or via the use of certificate leases.

In the first case, (1) each tenant CA Ei needs to issue its own tenant certificates Ci from a landlord certificate C and (2) the user U of a landlord certificate C may end up with n additional certificates: one from each tenant CA Ei. (The first inefficiency stems from the fact that certificates may be required to be issued by expensive to build and to operate secure vaults, and from the fact that the public key of a tenant CA Ei needs to be known to the verifier of Ci, since verifying Ci entails verifying a digital signature of Ei. However, few CAs can count on the fact that their public keys are sufficiently universally known, thus the public key of tenant CA Ei may need itself to be certified to belong to Ei, something adding another layer of complexity and inefficiency. The second inefficiency stems from the fact that a higher number of certificates is more difficult to manage, both at a system level and at a user level. For instance, U's cellular telephone may have enough memory to store and handle one certificate, but not 100 certificates.)

In the second case, a tenant certificate may need a second separate certificate, the lease certificate, to be verified and or validated. (This may in itself generate confusion and complexity.)

Let us now present various ways to implement double certificates. In a first way, when making a certificate C for a user U, besides C's usual certified data, landlord CA A may include in C's certified data (identifiers of) the tenant CAs, Ei,...,En (of course, n may equal 1 throughout this application). This way, each original A-certificate C also is in itself n tenant certificates: C1,..,Cn, where Ci denotes the tenant-certificate of Ei. For instance, C may take the form C=SIG_A(SN,U,PKU,ID,ED,AI,E1,,...,En).

All the above discussed properties, constructions and techniques for tenant CAs should be assumed to be extended to double certificates as well. In particular, a double cert C may explicitly include identifiers such as TENANT or DOUBLE, and AI may specify all necessary information about the tenant certificates, both common and tenant-CA-specific information. To emphasize this we may sometimes write a double cert in the form C=SIG_A(SN,U,PKU,ID,ED,AI,(E1AI1),...,(En,AIn)).

Again, because the public keys, PK1,...,PKn, of tenant CAs Ei,...,En, may not be explicitly known, they may be included in a double cert, preferably with an indication of the tenant CA they refer toFor instance, the resulting C may have the following form:

C=SIG_A(SN,U,PKU,ID,ED,AI,(E1,PK1),...,(En,PKn))

or

C=SIG_A(SN,U,PKU,ID,ED,AI,(E1,PK1,AI1),...,(En,PKn,AIn)).

Let us see what this entails. First, any device or entity capable of verifying a double cert C is automatically made capable of verifying Ei's digital signatures, because C signifies that PKi is indeed a public key of Ei. That is, C ensures that the tenant CAs' public keys do not need any separate certification. Second the single certificate C is automatically made of n separate certificates, call them C1,...,Cn. Preferably, Ci's serial number is C's SN, Ci's public key is C's PKU, and Ci's user is C's U. Preferably, each certificate Ci is in some sense issued by A (and thus verifiable with A's public key), but independently managed by tenant CA Ei using PKi to govern/state the validity/revocation/ suspension information of Ci. That is, tenant CA Ei controls certificate Ci and has the authority of validating/revoking/ suspending it by digital signatures relative to public key PKi certified within C. For instance, Ei may prove which certificates Ci are valid and which are revoked by issuing a periodic minimal CRL, CRLi, containing the serial numbers SNa,...,SNj corresponding to revoked Ci:

CRLi = SIG_Ei(SNa,...,SNj, DATE1,DATE2),

where DATE1 indicates the date of the current CRL and DATE2 that of the next CRL, and where Ei's digital signature is relative to the public key PKi certified within C. Alternatively, Ei may use PKi to manage its certificates Ci using the OCSP. For instance, it answers a request of validity about certificate serial number SN with

SIG_Ei(SN,valid,DATE)

where again Ei's digital signature is relative to the public key PKi certified within C and DATE indicates the time of the validity statement. Alternatively yet, PKi may the special public key of U.S. Patent 5,666,416 or U.S. Patent Application 60/277,244, that is, using the terminology of the latter application, the validity target X365/revocation target Y1, for which Ei knows the corresponding secret key X0/Y0, so as to prove the current validity/revocation status of Ci.

In sum, therefore, in an internal tenant-CA system, by issuing a single (double) certificate and thus making a single identification, one actually issues n different certificates, each independently managed by its own authority. Of course, this generates economies of scale that provide major conveniences to the Public Key Infrastructure.

It is envisaged that the landlord CA A preferably inserts a tenant CA into its certificates pursuant to an agreement with that tenant CA. For instance the landlord CA may be a credit-card company and a tenant CA a provider of services for its own customers. To demonstrate to a server that he is a customer of Ei and thus entitled to enjoy a given service/ resource/information, user U may provide C to the server, and identify that he is using C as a Ci certificate (e.g., by providing an identifier for Ei or for just "i", if the server is not a "Ei-server"). In response, the server may implement a challenge-response session, verify C using A's public key, and then use Ei's validity information to verify the current validity of the Ci certificate. If all or a proper subset of these checks are passed, the server provides U with the service/ resource/information he is entitled to have. Of course, it is a main advantage to U dealing with a single certificate while enjoying the benefits of n different certificates. If U's transactions with tenant cert Ci involve payment, the credit-card landlord CA may make or guarantee the payment, may directly bill U (e.g., in the next statement), and may collect fees from Ei. The process again simplifies and streamlines much more complex processes.

It should be understood that it is not necessary to identify Ei within the original certificate C. In particular, C may have the form

C=SIG_A(SN,U,PKU,ID,ED,AI;PK1....,PKn).

Here, for example, the tenant public keys are identified, but not the tenant CAs themselves. A separate certificate SCi of A (or other entity) may specify that Ei corresponds to PKi. For instance, SCi=SIG_A(Ei,PKi, AIi). This signature vouches that PKi belongs to Ei, and possibly additional information ---such as information specifying the privileges enjoyed by the tenant certificates Ci, that is, by those tenant certificates C that are managed with public key PKi. As for another example, the special certificate may have the form SCi=SIG_A(i,Ei, AIi), meaning that the ith tenant public key specified in the certificates C always belongs to Ei.

Other properties and modes of operations of external tenant-CA systems are extended to internal tenant-CA systems. For instance, by issuing a single certificate C, A is actually making n certificates, C1,...,Cn. Some of these certificates Ci provide significant benefits to their bearers, and so require that their users pay some due to Ei. The mere fact that C and thus C1,...,Cn are issued at once, needs not imply that U is compelled to pay these dues or that he will enjoy for free the privileges that Ci entails. Rather, because Ei is in control of Ci, it may decide, for example, to offer Ci for use and for a fee to U, and if U does not accept, use PKi to revoke Ci. Alternatively, Ei may put all its certificates Ci on suspension (e.g., utilizing PKi) and then "activate them" (e.g., prove them valid as soon as U agrees to pay his dues to enjoy the privileges of Ci).

Again, A may insert additional information AIi relative to PKi in its certificates C. For instance,

C=SIG_A(SN,U,PKU,ID,ED,AI,(E1,PK1,AIi),...,(En,PKn,AIn))

or

C=SIG A(SN,U,PKU,ID,ED,AI, (PK1,AIi),...,(PKn,AIi)).

In particular AIi may contain or consist of a separate serial number SNi. This way when user U wishes to use his certificate Ci with a party P, he may provide P with just an indication of Ei and SNi, thereby enabling P to retrieve the correct Ci. (Throughout this application the serial number of a tenant cert may be computed from that of the original cert. For instance, it can be obtain by offsetting SN in a standard way, such as making the tenant SN equal to SN+1 billion --- assuming that the original SN is less than 1 billion. As for another example, the tenant SN can be obtained by concatenating the tenant CA identifier, interpreted as a number with the original SN.)

Again, A may not issue as double certificate all of its certificates, but only those (whose owners) satisfy a given property, and preferably with the users'/tenant CAs consent.

Double certificates are reasonably long, because typically each public key PKi needs to be reasonably long.

(Wishing to stick with time-tested digital signature schemes, such as RSA, a CA public key should be 2,000-bit or better 4,000-bit long.) This makes the resulting C including n such keys at least n times long. To solve this problem, we construct double certificates C containing the one-way hash H(PKi) rather than PKi. (recall that a function H is a one-way hash function if it is fast to and it is computationally very hard to find two different strings X and Y such that H(X)=H(Y). Several such candidates functions have been proposed, in particular SHA-1, that maps strings of arbitrary length to 20-byte (i.e., 160-bit) strings.) Therefore a double certificate certifying H(PKi) (e.g., by having it within its certified data) is as good as a certificate certifying PKi, because no one may "sneak in C" a different public key by finding a different public key PKi' such that H(PKi')=H(PKi). Similarly, even though an indication of the tenant CA Ei needs not be as long as a public key, that information too may be stored in one-way hashed form within C. That is, C may certify within it H(Ei) rather than Ei. In fact, a certificate C may certify within it H(Ei,PKi) rather than (Ei,PKi). In general all certified information and in particular information about a tenant CA, may be conveniently certified in one-way hashed form within an internal tenant-CA system. Without any limitation intended, the following are possible examples of the resulting C:

    1. C=SIG_A(SN,U,PKU,ID,ED,AI,(E1,H(PK1)),...,(En,H(PKn))), or
    2. C=SIG_A(SN,U,PKU,ID,ED,AI,(E1,H(PK1,AI1)),...,(En,H(PKn,AIn))), or
    3. C=SIG_A(SN,U,PKU,ID,ED,AI;H(PK1),...,H(PKn)), or
    4. C=SIG_A(SN,U,PKU,ID,ED,AI,H(Ei,PK1),...,H(En,PKn)), or
    5. C=SIG_A(SN,U,PKU,ID,ED,AI,H(E1,PK1,AIi),...,H(En,PKn,AIn)), etc.

Though the actual value of X cannot be retrieved from H(X), the resulting Ci certificates can still be managed, because the actual X can be produced during a verification process, and because H guarantees that the X so produced is the original X (i.e., finding a different one would be computationally overwhelming). For instance, assume that Ei manages its certificates using the OCSP and that user U needs validation of his single certificate C as a Ci-certificate. Then, in case 1, an OCSP responder may provide in addition to ---say---
SIG_Ei(SN,valid,DATE)
also PKi. To verify Ci's validity then one verifies C using A's public key, uses H and PKi so as to compute H(PKi), verifies that H(PKi) is indeed certified within C, verifies SIG_Ei(SN,valid,DATE) using PKi, and finally checks that SIG_Ei(SN, valid,DATE) is a properly dated validity response for certificate serial number SN. (Here we assume that SNi=SN, that is that Ci has the same serial number of C.)

In example 2, the advantages of certifying information in one-way hashed form is even more apparent. In fact, the additional information AIi pertinent to tenant CA Ei may specify the various privileges, conditions, validity/revocation approach adopted, and any other relevant information of a Ci-certificate, and may be quite long, making unsuitable for direct inclusion into C. (Recall that n may very well equal 100, and storing directly AI1,...,AI100 may make C unwieldy.) On the other side, downloading or otherwise exhibiting the precise information about a certificate Ci at the time Ci is actually used may not be a burden. In particular, because, if the ---say--- server verifying Ci is working closely or often with Ei, it can be assumed to have AIi already "in local memory."

Double Certificates With Future Tenants

Double certificates offer tremendous convenience, but as described so far they require that the landlord CA knows in advance which are the tenant CAs. This poses some limitations. Assume that A has already issued 10 millions certificates. Then it would be a terrific opportunity for an entity E to take advantage of A's certification efforts as a tenant CA and to "sublet" all of them. But if decides to become a tenant CA after A issues all its double certs as above, then A would have to re-issue all of its 10 million certificates, and even worse, A would have to re-distribute them in various servers so as to ensure that E is known as a tenant CA in sufficiently many places. To avoid this problem, we put forward *internal future-tenant-CA* systems. A first method to build such systems is the following.

Assume, without loss of generality, that A wishes to have 100 tenant CAs, and that 50 of them, E1,...,E50, have already "signed up" as tenant CAs and additional 50 tenant CAs may sign up in the future. Also assume without loss of generality that all prior and future tenant CAs wish to have their public keys certified as part of the certified data of the double certificate. Then all first 50 CAs have already provided A with public keys PK1,...,PK50. Then A obtains 50 additional public keys, PK51,...,PK100. Preferably, these additional keys are obtained in a way that ensures that A itself does not know their corresponding secret keys SK51,...,SK100.

For instance, a secure-hardware device D may be used to generate public-secret key pair (PKi,SKi), output PKi, and keep secret inside SKi. The output PKi is then inserted in the certificate C that A issues as one of the PK51,..., PK100. Indeed, all 50 public key PK51,...,PK100 can be generated this way, either by the same device D or by different devices D.

Alternatively, A may have a third party B generate (PKi,SKi), provide PKi to A and secretly store SKi. The so generated PKi is then inserted in the certificate C that A issues as one of the PK51,...,PK100. Indeed all PK51,...,PK100 may be generated by B in this fashion, or by a multiplicity of such third parties B. Such party/parties B, may themselves use secure-hardware to generate (PKi,SKi) pairs, to ensure that they are not going to leak SKi deliberately, inadvertently, or because subject to a malicious attack.

Alternatively yet, (PKi,SKi) may be generated by a multiplicity of third parties (e.g., B1,B2,B3, B4 and B5), using a special procedure so that the public key PKi is easily computed and output, while the secret key SKi is not known to or easily computable by any individual third party (e.g. to each Bj individually), but is computable easily by all third parties together (based on secret information they possess). Preferably, SKi should not be known or easily computable by not just to a single third party, but even to/by special subgroups of third parties (e.g., any group of 3 third parties should not be able to compute SKi in any reasonable amount of time, even if its members collaborate in any fashion and share all the information in their possession). This ensures that even if more than one third party is malicious, then SKi remains secret. Preferably too, SKi should be easily computable not just by all third parties, but by some other special subgroups of the third parties (e.g., any subgroup of 4 or more third parties). This ensures that even if some third party becomes malicious or unavailable, SKi could still be computed. Several such methods are known in the cryptographic literature. The so generated PKi is then inserted in the certificate C that A issues as one of the PK51,...,PK100. Indeed all PK51,..., PK100 may be generated by a group of third parties in this fashion, or by a multiplicity of third-party groups B. As further protection, secure-hardware may be used within such group/groups to ensure SKi is not leaked deliberately, inadvertently, or as a result of a malicious attack.

Finally, the public keys PK51,...,PK100 may be generated by different methods. (E.g., some by the first method above, some by the second method and some by the third method.)

For instance (as in one of the above discussed, internal tenant-CA method), after obtained the additional public keys PK51,...,PK100, A may issue the following double certificate

C=SIG_A(SN,U,PKU,ID,ED,AI;PK1,...,PK100)

or

C=SIG_A(SN,U,PKU,ID,ED,AI;H(PK1),...,H(PK100)).

We already have seen as this certificate can be managed as 50 independent tenant certificates C1,...,C50, because in that case the first 50 tenant CAs E1,...,E50 have the secret keys SK1,...,SK20 corresponding to the first certified public keys (directly or in one-way hashed form). But the very same certificate C can also be managed as 50 additional independent tenant certificates C51,...,C100 by 50 other tenant CAs E51,...,E100 who contact A after many of its certificates C have already been issued. In fact, to make this happen one must provide E51,...,E100 with the proper secret keys SK51,..,SK100. This is doable because each additional secret key SKi is in secret storage and could be delivered to Ei, preferably in a way that makes SKi known only to Ei. For instance, if SKi is stored in a special secure-hardware device D, then, under tight control, D may deliver SKi toEi. For instance, D may be delivered to Ei, and then a special signal (e.g. a special password, a digital signature, a digital signature relative to a public key securely embedded into D) can be input to D (e.g., by A) so that D would output SKi. Better yet, D should be manufactured so that more than one special signal would be needed.

If the same secure device D securely stores more than one secret key SKi, then D may, under tight control and special signals deliver SKi to a second secure device D' (e.g., a secure smart card) which will hen be delivered to Ei, and then other special signals may induce D' to output or make available SKi into Ei's environment. Better yet, D may, under tight control and special signals deliver different pieces of information to different secure devices (e.g., two secure devices D' and D"), and then these secured devices can be brought (preferably by independent routs, to Ei, where they would under tight control and special signals release in Ei's environment their pieces of information so that SKi would be easily reconstructed from them.

Alternatively, D may under tight control and special signals deliver SKi to Ei encrypted in a key known to Ei. (For instance, Ei may generate a special public-secret key encryption pair, the public key may be input to D -e.g., digitally signed, say, by A-- and then, possibly after additional special signals, D may output SKi encrypted with Ei's special public encryption key. Ei, and only Ei, will then easily decrypt and obtain SKi.)

If a third party has generated (PKI,SKi) then, after due control and authorization, the third party may take appropriate steps (e.g., steps discussed above) so as to privately deliver SKi to Ei.

If a group of third parties collectively know Ski, then sufficiently parties in the group may individually and securely deliver to Ei the information in their possession so that Ei may privately enter in possession of SKi.

In an internal future-tenant-CA as described above, a separate certificate may be issued by A or other proper entity binding Ei to PKi, as well as, if wanted, to some particular additional information AI. For instance, one such certificate may have the form

SIG_A(Ei,PKi,AIi).

These certificates may be coalesced into a single compound certificate CC: e.g., after obtaining 30 additional tenant CAs the compund certificate may look like

CC=SIG_A((E51,PK51,AI51),....,(E80,PK80,AI80),AI, DATEINFO).

A may publicize such compound certificates as they are modified. A may also publicize these compound certificates so as to encompass the initial 50 tenant CAs, so as to deal with a single uniform platform for the use of Ci verificators. For instance, we may have

CC=SIG_A((E1,PK1,AI1),...,(E80,PK80,AI80),AI, DATEINFO).

Each time a verifier of a Ci certificate looks up or receives a new valid compound certificate, may junk the older one and store the latest one.

Double certificates can also be implemented by having A issue double certificates C containing, relative to future tenant CAs, the special public key SPKi of a trapdoor commitment scheme (many available in the literature). In such a scheme A may have a trapdoor that enables A, and only A, to prove that SPKi is the one-way hashed value of any value V it wants, and thus V can be decided in the future. By revealing a proof P and value V, A can prove that SPKi is indeed, the "one-way hash of V." For anyone other than A, it would be very hard to find any value V' and a proof P' so that SPKi results the one-way hash of V'. (And if V has not yet proved by A to be the one-way hash of V, then it would be very hard for anyone else to prove SPKi to be the one-way hash value of any V', including V'=V.) This enables A to issue its certificates C so that they directly certify the public keys of the tenant CAs known before hand, and leave trapdoor-hashed "place holders" SPK51,SPK100 for the future CAs that can be "filled in" a secure way only after these future tenant CAs have been selected. For instance, A may issue the following certificate C:

C=SIG_A(SN,U,PKU,ID,ED,AI,(E1,PK1,AIi),...,(E50,PK50,AI50);SPK51,...,SPK100).

After ---say--- tenant CA E51, its public key PK51 and additional information AI51 have been chosen, A can easily prove that (E51,PK51,AI51) is the value that one-way hashes to SPK51. Note that SPKi can, in this application, be a one-time digital signature scheme, in which case proving that "SPKi is the one-way hash of a value V" means providing a digital signature of V with respect to SPKi. (In either case, A does not have the incentive to prove that SPKi is the one-way hash of two different values. First because A, as a landlord CA, is trusted. Second, doing so may remove the one-wayness of the hash/make it easy to forge additional signatures, and A can be blamed/fined if two values are found that one-way hash to the same SPKi.)

Again, double certificates may not be issued also for use as the landlord's certificates. They may be issued with exclusive goal of enabling tenant-CA systems, and can in particular be quite different in format and content both from ordinary certificates and from ordinary-plus-tenants certificates.

Generality Of The Inventions

Throughout this application, the landlord CA of a certificate C may not be the original issuer of C. Rather, C may have been issued by a CA A' and then re-issued by A in order to enable various tenant-CA functions.

It should be appreciated that the precise content of the certificates should not be interpreted to limit our inventive systems. Great latitude can be used in deciding what information is certified in the certificates, and still remain within the scope of the inventions. For instance, in the above certificate C, that is,

C=SIG_A(SN,U,PKU,ID,ED,AI,(E1,PK1,AIi),...,(E50,PK50,AI50);SPKS1,...,SPK100),

like in all other certificates C discussed herein, SN can be omitted. This may in fact be useful if A does not intend to manage (e.g., validate/revoke) its own certificates C, for its own purposes other than enabling tenant CAs. For instance, if A issues C only for the purpose of enabling tenant certificates, it may not need to specify SN. Similarly, in this case ID/ED may also be removed from the information certified within C. Also AI may be removed or be null, as we have already said. Finally, also PKU may be removed. For instance if Ei will be in charge of choosing U's public key (and deliver to him ---e.g., in a secure smart card) the corresponding SKi. In this case, Ei may provide A with U's public key for Ci, PKUi, and this piece of data can be made part of AIi.

Any idea/technology applied to any one of the tenant-CA systems discussed herein should be intended to be extended to all applicable other tenant-CA systems. For instance, a one-way function H can be used in the latest considered

C=SIG_A(SN,U,PKU,ID,ED,AI,(E1,PKI,AIi),...,(E50,PK50,AI50);SPK51,...,SPK100) to yield

C=SIG_A(SN,U,PKU,ID,ED,AI,H(E1,PK1,AIi),...,H(E50,PK50,AI50);SPK51,...,SPK100) or

C=SIG_A(SN,U,PKU,ID,ED,AI,H(E1,PK1,AIi),...,H(E50,PK50,AI50);H(SPK51),...,H(SP K100)).

Similarly, one-way H could be used in all tenant-CA systems discussed herein. For example and without limitation, the certificate lease

LC = SIG_A(E,PKE,STANDARDTENANT,AI)

can be constructed as

LC = SIG_A(E,H(PKE),STANDARDTENANT,AI),

or

LC = SIG_A(E,H(PKE),STANDARDTENANT,H(AI)),

or

LC = SIG_A(E,PKE,H(STANDARDTENANT),AI),

or

LC = SIG_A(H(E,PKE,STANDARDTENANT,AI)).

In particular all tenant-CA systems could be constructed so as to hide the content, meaning or even existence of all tenant CAs and/or tenant certificates. For instance, but without limitation, one can use a one-way H together with a random number when hashing a value X. E.g., rather than hashing X as x=H(X), one can compute x'=H(X,R). In the first case, to verify that X is indeed the value whose hashed form is x, one needs just apply H to X and verify that x is the result. In the second case, even if one guesses what the value X may be, one cannot verify that indeed x' is a one-way hashed form of X. (Applying H to X would yield a value other than x'.) To verify this fact one must be given not only X (which may be easy to guess) but also the random R which will be hard to guess if sufficiently long. Thus the relevant R value may be given to a user or to the tenant CA so that he/it may enable verification of tenant certs by revealing R, but otherwise preventing potential enemies/competitors from knowing which tenants CAs, or tenant certs, or properties or tenant certs have been chosen. For instance,
the certificate lease
LC = SIG_A(E,PKE,STANDARDTENANT,AI)
can be constructed as
LC = SIG_A(H(R1,E),PKE,STANDARDTENANT,AI),
thereby enabling E to prove that LC is a lease certificate making it a tenant CA of A by revealing R1 when giving LC, but preventing someone who just gets LC to verify that indeed E is the tenant CA: even if the possible tenant CAs are sufficiently few in numbers to be tried all, the possible random strings R1 are impossibly many.

While the invention has been disclosed in connection with various embodiments, modifications thereon will be readily apparent to those skilled in the art. Accordingly, the scope of the invention is set forth in the following claims.

References

[1] Efficient Certificate Revocation; by Silvio Micali; Proceedings 1997 RSA Data Security Conference.

[2] *Online Certificate Status Protocol,* version 2. Working document of the Internet Engineering Task Force (IETF) RFC 2560.

[3] Public Key Infrastructure, Final Report; MITRE Corporation; National Institute of Standard and Technology, 1994.

[4] Secure Hash Standard; FIPS PUB 180, Revised July 11, 94 (Federal Register, Vol. 59, No. 131, pp. 35211-34460); revised August 5, 1994 (Federal Register Vol. 59, No. 150, pp. 39937-40204).

[5] Low-Cost Hash Sequence Traversal; by Markus Jakobsson; Financial Cryptography 2002.

[7] Internet Public Key Infrastructure, Part III: Certificate Management Protocols; by S.Farrell, A. Adams, and W. Ford; Internet Draft, 1996.

[8] Privacy Enhancement for Internet Electronic Mail - Part II: Certificate-Based Key Management; by S. Kent and J. Linn; 1989.

**Claims**

1. A method of managing a digital certificate, comprising:

> a landlord certificate authority providing a digital certificate;
> a secure hardware device generating a series of n hash values;
> the secure hardware device providing an nth hash value to the landlord certificate authority, wherein other hash values are not readily available to the landlord certificate authority;
> the landlord certificate authority placing the nth hash value in the certificate;
> the landlord certificate authority digitally signing the certificate containing the nth hash value to obtain a digitally signed certificate;
> a tenant certificate authority obtaining the digitally signed certificate;
> the tenant certificate authority obtaining the n hash values;
> the tenant certificate authority periodically issuing a proof of validity that is a hash value previous to the nth hash value in the series of n hash values if the certificate is valid when the proof is issued by the tenant certificate authority.

2. The method of claim 1, wherein the digital certificate is managed for accessing a door, the method further including:

causing a card to receive the proof;
causing the card to be presented to a mechanism of the door;
causing the mechanism to locally verify the proof using the nth hash value included in the digitally signed certificate; and
causing the door to open if the proof is verified as correct.

3. The method according to Claim 2, wherein the card receives the proof from a wired card device.

4. The method according to Claim 2, wherein the card is contactless.

5. The method according to Claim 2, wherein the card is at least one of: a cellular phone and a PDA.

6. The method according to Claim 2, wherein the card receives the proof wirelessly.

7. The method according to claim 2, wherein the card receives the proof via the Internet or from a third party during a prior interaction.

8. The method according to Claim 1, wherein a relying party queries for and receives the proof from the tenant certificate authority.

9. The method according to Claim 2, wherein the card also carries the digitally signed certificate.

10. The method according to Claim 9, wherein the digitally signed certificate is relative to a public key certified within the digital certificate contained in the card.

11. The method according to Claim 10, wherein the card presents to the mechanism of the door both the proof and the digitally signed certificate.

12. The method according to Claim 1, wherein the proof is locally verified by iterating a one-way hash function on the proof a number of times and comparing a result thereof to the nth hash value included in the digitally signed certificate.

13. The method according to Claim 2, wherein the proof is one of a plurality of proofs relative to a plurality of access rights to the door.

14. The method according to Claim 13, wherein a single authority manages the plurality of access rights.

15. The method according to claim 13 wherein the plurality of access rights are independently managed by a plurality of authorities.

**Patentansprüche**

1. Verfahren zum Verwalten eines digitalen Zertifikats, enthaltend:

eine Eigentümerzertifikatsbehörde, die ein digitales Zertifikat vorsieht;
eine sichere Hardware-Vorrichtung, die eine Reihe von n Hashwerten erstellt;
wobei die sichere Hardware-Vorrichtung einen n-ten Hashwert für die Eigentümerzertifikatsbehörde vorsieht, wobei andere Hashwerte für die Eigentümerzertifikatsbehörde nicht ohne Weiteres verfügbar sind;
wobei die Eigentümerzertifikatsbehörde den n-ten Hashwert in das Zertifikat einfügt;
wobei die Eigentümerzertifikatsbehörde das Zertifikat, das den n-ten Hashwert enthält, digital unterzeichnet, um ein digital unterzeichnetes Zertifikat zu erhalten;
eine Mieterzertifikatsbehörde, die das digital unterzeichnete Zertifikat erhält;
wobei die Mieterzertifikatsbehörde die n Hashwerte erhält;

wobei die Mieterzertifikatsbehörde periodisch eine Gültigkeitsbestätigung ausgibt, die ein Hashwert vor den n-ten Hashwert in der Reihe von n Hashwerten ist, wenn das Zertifikat gültig ist, wenn die Bestätigung von der Mieterzertifikatsbehörde ausgegeben wird.

2. Verfahren nach Anspruch 1, wobei das digitale Zertifikat zum Öffnen einer Tür verwaltet wird, wobei das Verfahren des Weiteren Folgendes enthält:

Bewirken, dass eine Karte die Bestätigung empfängt;
Bewirken, dass die Karte einem Mechanismus der Tür präsentiert wird;
Bewirken, dass der Mechanismus die Bestätigung mittels des n-ten Hashwertes lokal überprüft, der in dem digital unterzeichneten Zertifikat enthalten ist; und
Bewirken, dass sich die Tür öffnet, wenn sich die Bestätigung in der Überprüfung als korrekt erweist.

3. Verfahren nach Anspruch 2, wobei die Karte die Bestätigung von einer verdrahteten Kartenvorrichtung empfängt.

4. Verfahren nach Anspruch 2, wobei die Karte kontaktlos ist.

5. Verfahren nach Anspruch 2, wobei die Karte mindestens eine von: einem Mobiltelefon und einem PDA ist.

6. Verfahren nach Anspruch 2, wobei die Karte die Bestätigung drahtlos empfängt.

7. Verfahren nach Anspruch 2, wobei die Karte die Bestätigung über das Internet oder von einer dritten Partei während einer vorangehenden Interaktion empfängt.

8. Verfahren nach Anspruch 1, wobei eine vertrauende Partei die Bestätigung von der Mieterzertifikatsbehörde abfragt und empfängt.

9. Verfahren nach Anspruch 2, wobei die Karte auch das digital unterzeichnete Zertifikat trägt.

10. Verfahren nach Anspruch 9, wobei sich das digital unterzeichnete Zertifikat auf einen öffentlichen Code bezieht, der in dem digitalen Zertifikat zertifiziert ist, das in der Karte enthalten ist.

11. Verfahren nach Anspruch 10, wobei die Karte dem Mechanismus der Tür sowohl die Bestätigung als auch das digital unterzeichnete Zertifikat präsentiert.

12. Verfahren nach Anspruch 1, wobei die Bestätigung durch mehrmaliges Iterieren einer Einweg-Hashfunktion auf der Bestätigung und Vergleichen des Ergebnisses mit dem n-ten Hashwert, der in dem digital unterzeichneten Zertifikat enthalten ist, lokal überprüft wird.

13. Verfahren nach Anspruch 2, wobei die Bestätigung eine von mehreren Bestätigungen ist, die sich auf mehrere Zugangsrechte zu der Tür beziehen.

14. Verfahren nach Anspruch 13, wobei eine einzige Behörde die mehreren Zugangsrechte verwaltet.

15. Verfahren nach Anspruch 13, wobei die mehreren Zugangsrechte unabhängig von mehreren Behörden verwaltet werden.

**Revendications**

1. Procédé de gestion d'un certificat numérique selon lequel :

une autorité de certification de propriétaire fournit un certificat numérique,
un dispositif matériel sécurisé génère une série de n valeurs de hachage,
le dispositif matériel sécurisé fournit une énième valeur de hachage à l'autorité de certification de propriétaire, les autres valeurs de hachage n'étant pas facilement disponibles pour l'autorité de certification de propriétaire,
l'autorité de certification de propriétaire, place la énième valeur de hachage dans le certificat,
l'autorité de certification de propriétaire signe de manière numérique le certificat contenant la énième valeur de hachage pour obtenir un certificat signé de manière numérique,
une autorité de certification de locataire obtient le certificat signé de manière numérique,
l'autorité de certification de locataire obtient les n valeurs de hachage,
l'autorité de certification de locataire délivre périodiquement une preuve de validité qui est une valeur de hachage antérieure à la énième valeur de hachage dans la série des n valeurs de hachage si le certificat est valide lorsque la preuve est délivrée par l'autorité de certification de locataire.

2. Procédé conforme à la revendication 1,
selon lequel
le certificat numérique est géré pour avoir accès à une porte, ce procédé comprenant en outre les étapes consistant à :

faire en sorte qu'une carte reçoive la preuve,
faire en sorte que la carte soit présentée au mécanisme de la porte,
faire en sorte que le mécanisme vérifie localement la preuve en utilisant la énième valeur de hachage comprise dans le certificat signé de manière numérique, et
faire en sorte que la porte s'ouvre si la preuve est vérifiée comme étant correcte.

3. Procédé conforme à la revendication 2,
selon lequel
la carte reçoit la preuve d'un dispositif à carte câblée.

4. Procédé conforme à la revendication 2,
selon lequel
la carte est exempte de contacts.

5. Procédé conforme à la revendication 2,
selon lequel
la carte est un téléphone cellulaire et/ou un PDA.

6. Procédé conforme à la revendication 2,
selon lequel
la carte reçoit la preuve sans fil.

7. Procédé conforme à la revendication 2,
selon lequel
la carte reçoit la preuve via internet ou à partir d'une troisième partie au cours d'une interaction antérieure.

8. Procédé conforme à la revendication 1,
selon lequel
une partie de confiance demande et reçoit la preuve de l'autorité de certification de locataire.

9. Procédé conforme à la revendication 2,
selon lequel
la carte porte également le certificat signé de manière numérique.

10. Procédé conforme à la revendication 9,
selon lequel
le certificat signé de manière numérique concerne une clé publique certifiée dans le certificat numérique renfermé dans la carte.

11. Procédé conforme à la revendication 10,
selon lequel
la carte présente au mécanisme de la porte à la fois la preuve et le certificat signé de manière numérique.

12. Procédé conforme à la revendication 1,
selon lequel
la preuve est vérifiée localement par itération à plusieurs reprises d'une fonction de hachage à sens unique sur la preuve et comparaison du résultat obtenu à la énième valeur de hachage renfermée dans le certificat signé de manière numérique.

13. Procédé conforme à la revendication 2,
selon lequel
la preuve est une preuve parmi plusieurs preuves relatives à plusieurs droits d'accès à la porte.

14. Procédé conforme à la revendication 13,
selon lequel
une seule autorité gère tous les droits d'accès.

15. Procédé conforme à la revendication 13,
selon lequel
les droits d'accès sont gérés indépendamment par plusieurs autorités.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5666416 A
- US 277244 P

**Non-patent literature cited in the description**

- **BRUCE SCHNEIER.** Applied cryptography. John Wiley & Sons, Inc, 1996
- **SILVIO MICALI.** Efficient Certificate Revocation. *Proceedings,* 1997
- Secure Hash Standard. FIPS PUB, 11 July 1994, vol. 59, 35211-34460
- SECURE HASH STANDARD. 05 August 1994, vol. 59, 39937-40204
- **MARKUS JAKOBSSON.** Low-Cost Hash Sequence Traversal. *Financial Cryptography,* 2002
- **S.FARRELL ; A. ADAMS ; W. FORD.** *Internet Public Key Infrastructure, Part III: Certificate Management Protocols,* 1996
- **S. KENT ; J. LINN.** *Privacy Enhancement for Internet Electronic Mail - Part II: Certificate-Based Key Management,* 1989